Europäisches Patentamt

European Patent Office

Office européen des brevets

(19)

(11)  **EP 1 237 820 B1**

(12)    **EUROPEAN PATENT SPECIFICATION**

(45)  Date of publication and mention
of the grant of the patent:
**23.02.2005   Bulletin 2005/08**

(21)  Application number: **00966955.7**

(22)  Date of filing: **25.09.2000**

(51)  Int Cl.⁷: $C02F\ 1/72$, $C02F\ 1/30$

(86)  International application number:
**PCT/US2000/026553**

(87)  International publication number:
**WO 2001/036338 (25.05.2001 Gazette 2001/21)**

(54)  **PROCESS AND SYSTEM FOR TREATMENT OF WASTE STREAMS CONTAINING WATER-SOLUBLE POLYMERS**

VERFAHREN UND EINRICHTUNG FÜR DIE BEHANDLUNG VON ABWÄSSERSTRÖEMUNGEN AUS WASSERLÖSLICHEN POLYMEREN

PROCEDE ET SYSTEME DE TRAITEMENT DES EAUX RESIDUAIRES CONTENANT DES POLYMERES HYDROSOLUBLES

(84)  Designated Contracting States:
**AT BE CH CY DE DK ES FI FR GB GR IE IT LI LU MC NL PT SE**

(30)  Priority:   **19.11.1999   US 166680 P
25.02.2000   US 515982**

(43)  Date of publication of application:
**11.09.2002   Bulletin 2002/37**

(73)  Proprietor: **Isolyser Company, Inc.**
**Norcross, GA 30092 (US)**

(72)  Inventors:
• **CHISHOLM, Robert**
**McKinney, TX 75070 (US)**
• **BECK, Debrah, A.**
**Denton, TX 76209 (US)**
• **STEWARD, John, B.**
**McKinney, TX 75070 (US)**
• **JOHNSTON, Jordan, M.**
**Whitesboro, TX 76273 (US)**

(74)  Representative: **Nash, David Allan**
**HASELTINE LAKE,
Redcliff Quay
120 Redcliff Street
Bristol BS1 6HU (GB)**

(56)  References cited:
**US-A- 5 181 967**

• **DATABASE WPI Section Ch, Week 197705, 15 December 1976 (1976-12-15) Derwent Publications Ltd., London, GB; Class A, AN 1977-08440y XP002157860 & JP 51 146759 A (EBARA), 15 December 1976 (1976-12-15)**
• **DATABASE WPI Section Ch, Week 199914, 26 January 1999 (1999-01-26) Derwent Publications Ltd., London, GB; Class D, AN 1999-161848 XP002157861 & JP 11 019664 A (MATSUNAGA K), 26 January 1999 (1999-01-26)**
• **DATABASE WPI Section Ch, Week 199936, 29 June 1999 (1999-06-29) Derwent Publications Ltd., London, GB; Class A, AN 1999-425087 XP002157862 & JP 11 172039 A (IDEMITSU PET.), 29 June 1999 (1999-06-29)**

**Description**

**BACKGROUND OF THE INVENTION**

**Field of the Invention**

This invention relates generally to a process and system for treating waste streams containing water-soluble polymer materials. In particular, the invention involves a process and system that combines free radical generation, oxidation, and microbial degradation to ensure solubilization, sterilization and permanent destruction of water-soluble polymeric materials sufficiently to facilitate liquid stream disposal.

**BACKGROUND**

During the twentieth century, a number of environmental catastrophes have lead to an increased global awareness of environmental issues. International treaties, congressional acts, and executive orders have resulted in a number of regulations controlling all aspects of the environment and health and safety practices in the workplace. In particular, the disposal of industrial waste has been heavily regulated. Landfills nationwide have been closed and industry has been forced to turn to using alternatives such as conservation, recycling, fuel blending, deep-well injection and incineration.

In recent years, efforts in the field of industrial wastewater treatment have included various methods of oxidation-reduction, including photolysis accomplished by addition of oxidative agents such as hydrogen peroxide or Fenton's reagent, and subsequent irradiation with ultraviolet radiation. See Bolton *et al.,* "Homogeneous Photodegradation of Contaminated Water on Introduction" review paper, CRC Press, Boca Raton, FL (1993). However, Bolton *et al.,* do not describe the processing of polyvinyl alcohol materials by oxidation using hydrogen peroxide followed by irradiation by any mechanism.

The medical industry generates millions of pounds of waste each year. Much of the waste is related to the use of disposable materials, such as personal protective clothing, equipment, and accessories necessary to patient care that become contaminated by bloodborne pathogens and are unsafe for reuse. To prevent the spread of disease, it is imperative, and required by law, that these materials be discarded and not reused.

The nuclear industry also generates millions of pounds of waste each year. In the nuclear industry, much of the waste is related to the use of disposable materials such as personal protective clothing, bags, mop heads, rags, and other accessories that become contaminated by radioactive material, and are unsafe or impractical for reuse. The waste disposal and landfilling practices of the nuclear industry are highly regulated, and nuclear burial ground space is limited.

Other industries also generate waste streams with similar characteristics. In seeking alternatives to landfilling and incineration, products have been developed that are water-soluble. These products present a convenient and cost effective alternative to conventional waste disposal means.

The most readily available water-soluble polymer is polyvinyl alcohol (PVA). PVA fabric is a tough, whitish polymer that can be formed into strong films, tubes and fibers that are highly resistant to hydrocarbon solvents. PVA is inherently water-soluble. It can be made to be insoluble by the use of cross-linking agents. PVA is commonly used in the form of white woven material to make disposable personal equipment, such as garments, apparel, linens, drapes, towels, sponges, gauze, utensils, rags, mops and other useful articles. These articles are produced from non-woven, woven, knitted or otherwise formed film or fabric, and combinations thereof, of thermoplastic polyvinyl alcohol polymer fabrics and fibers that are water-soluble.

U.S. Patent 5,208,104, issued to Ueda *et al.,* discloses a water-soluble polyvinyl alcohol fiber having a water-soluble temperature of 100° C. or below, and a process for producing the fiber.

The value of disposable equipment and disposable supplies manufactured from PVA is dependent upon the user's ability to safely, permanently, and economically dispose of the material. Since the introduction of PVA materials, the belief in industry was that water-soluble PVA could be simply solubilized in hot water and discharged to sanitary sewers. As a result, historical practice has involved placing garments, utensils, and other clothing accessories and equipment made of PVA film, fabric or fiber, into large hot water wash tank in which the material was solubilized and then discharged to sanitary sewers or tank farms for further treatment of other contaminants.

U.S. Patent 5,181,967, issued to Honeycutt, discloses a method of disposing of utensils after use. The utensils are provided as molded, formed or extruded articles which are only water-soluble at temperatures above 37° C. After use, the utensils are subjected to water at a sufficient temperature to substantially dissolve them whereupon the water and dissolved articles are subjected to sewer disposal.

U.S. Patent 5,650,219 issued to Honeycutt, discloses a method of disposing of personal protective clothing and other useful articles formed of thermoplastic polyvinyl alcohol polymer fiber, the fiber being water-soluble only at temperatures above approximately 37° C and preferably above 50° C. After use, the fabric is subjected to water at a sufficient temperature to substantially dissolve the fabric whereupon the water and dissolved fabric are subjected to disposal.

In addition to the development of PVA, other water-soluble polymer products have recently been developed. These materials have physical properties and characteristics very similar to that of PVA. Like PVA, these materials can be used for manufacturing disposable personal equipment, such as garments, apparel, linens, drapes, towels, sponges, gauze, utensils, rags, mops and other useful articles.

A critical disadvantage of the current practice of PVA disposal is that the PVA material does not remain in solution, as was once believed. Instead, the introduction of air or oxygen present in turbulent fluid transport initiates resolidification of the PVA material. The PVA material precipitates out of solution into a hardened gelled type substance. The gelled substance dehydrates to form insoluble plastic plugs that have aggregated in the pipes and drainage systems in close proximity to where the solutions were discharged. As a result, costly remediation actions have been, and will continue to be required to restore damaged piping, sewer lines, ditches and other means of conveyance. Additionally, it is unknown how much precipitated PVA material has been delivered to sanitary treatment facilities nationwide. The resolidification phenomenon has had a catastrophic impact on many of the industries that relied upon the use of water-soluble PVA products, as well as the suppliers of the PVA material. The problem results from the fact that the current practice of solubilizing PVA for disposal involves the solubilization of a solid without destruction of the underlying structure of that solid. Elimination of a viable treatment option forces numerous industries to rely on landfill and incineration alternatives. As a result, an urgent and detrimental environmental condition has been created.

Another disadvantage of the current practice of PVA disposal is the failure of the current process to completely sterilize and destroy all hazardous bloodborne pathogens, leading to the possibility of cross-infection and emission of pathogens into the sewer system. This occurs as a result of material designs that permit the solubilization of the PVA at temperatures below those necessary to destroy all biological agents, and the lack of any secondary sterilization process step.

Another disadvantage of the current practice of PVA disposal is the failure of the current process to reduce the volume of radioactive material in the contaminated PVA waste stream. In the nuclear industry, PVA material is often contaminated with hazardous radioactive material. The exposure to water at a temperature sufficient to solubilize PVA material does not sufficiently decontaminate the aqueous PVA waste stream to allow environmentally safe or legally compliant discharge to tank farms or sanitary sewers.

It is therefore desirable to develop a process and system for treating solid waste comprising PVA or other water-soluble polymer materials that eliminates subsequent downstream precipitation of the polymer material from the liquid waste stream. It is further desirable to develop a system for treating solid waste comprising water-soluble polymer material that destroys or neutralizes hazardous bloodbome pathogens. It is further desirable to develop a system for treating solid waste comprising water-soluble polymer material that decreases the volume of radioactive contamination in a liquid waste stream such that the waste stream is suitable for secondary treatment of residual radioactive contamination, discharge, reuse, or recycle. It is further desirable to develop a system for treating solid waste comprising water-soluble polymer material that results in a waste stream that meets or exceeds regulatory limitations for disposal to sanitary sewers.

Recently, investigation by another team of scientists not associated with applicants has led to initial research concerning treatment of polyvinyl alcohol-containing solutions by various options, including the use of ultraviolet radiation and hydrogen peroxide. Note Lawrence Oji, "Oxidative Mineralization and Characterization of Polyvinyl Alcohol for Compatibility With Tank Farm Processing Chemistry," Extended Abstract of Report No. RP-99-00524, Rev. 0, a memorandum, and a subsequent complete Report of the same title dated June 30, 1999, both not prior art to the instant invention. The Oji Abstract represents the apparent summary of test data developed from bench-top testing that promotes potential treatment options and performance parameters for further process development and field studies. The summary appears to be limited in scope, only addressing the reduction of a PVA solution to simpler organic compounds. The process suggested in the Oji paper (the photolysis of hydrogen peroxide to generate hydroxyl radicals) differs substantially in detail and application from that disclosed herein. The ultraviolet wavelength promoted for use in this paper results in a hydrogen peroxide residual concentration high enough that it necessitates a process step of sonification to reduce its concentration prior to discharge of the treated solution. The 48-page Report gives some preliminary research concerning flasks and a request for further development and tests toward a commercial solution.

JP-A-51-146759 discloses the treatment of an aqueous solution containing PVA, by irradiating the solution with ionising rays while dissolving oxygen in the solution, so that the PVA is oxidised and decomposed.

JP-A-11-019664 discloses the treatment of waste water by irradiating it with ultraviolet light after adding ferric salt solution, concentrated hydrogen peroxide and zirconium oxide to the waste water, to decompose organic substances in it.

JP-A-11-172039 discloses the decomposition of a water soluble polymer, in the presence of an oxidizing agent, hydroquinone, iron ions, or copper ions.

## SUMMARY OF THE INVENTION

According to the present invention, there is provided a process for treating an aqueous solution containing (i) a water-soluble polymer and (ii) radioactive material, said process comprising:

heating the aqueous solution to a temperature of at least 82.2°C (180°F);
introducing at least one oxidizing agent into the aqueous solution; and
maintaining the aqueous solution at a reaction temperature of at least 82.2°C (180°F) for a period of time sufficient to react, degrade or break down at least a portion of the polymer to produce at least one degradation product.

A primary advantage of the present invention is that is provides a process for treating solid waste comprising water-soluble polymer material that eliminates subsequent downstream precipitation of the polymer material from the liquid waste stream. Another advantage of the present invention is that it provides a process for treating solid waste comprising water-soluble polymer material that is capable of destroying the polymer material in products regardless of whether they are hot or cold water-soluble.

The process of the current invention can be used with polymers such as PVA, sodium polyacrylate, polymaleic acid or ammonium polyacrylate. The current invention has been found especially effective in the treatment of aqueous solutions containing PVA. This process has been field tested to specifically address the characteristic issues raised by the use and ultimate disposal of this material, including:

• Solubilization of PVA and removal of insoluble, incompatible materials;

• Efficient/cost effective reduction of the PVA solution to simple organic acids;

• Removal of solubilized radioactive material;

• Adjustment, when desired, of the pH of the solution; and

• Biochemical oxidation of residual total organic carbon.

Applicants have found an optimum PVA concentration range of 0.5 - 1.0% by weight at ambient temperatures for effectively managing the solution during the early stages of the photochemical treatment phase. Concentrations up to 30% by weight can be treated. Although at higher PVA concentrations, the solution temperature range is preferably increased to between about 180 °F to about 230 °F. Field trials by applicants have demonstrated that in a comprehensive PVA treatment program, system efficiency and maintenance, coupled with extremely high organic loading resulting from higher initial PVA solution concentrations, make it advantageous not to exceed 30% although higher PVA concentrations may be employed and are within the scope of the invention. Applicants believe they are the first to recognize the physical/mechanical problems associated with managing 4.0 - 5.0% concentrations, and the first to take into account the extremely high total organic carbon loading generated in the effluent of such a process.

A specific advantage of the present disclosure is that it in some embodiments provides a process and system for treating solid waste comprising water-soluble polymer material that efficiently destroys substantially all of the polymer material in the waste stream, although for certain applications it may be desirable to destroy less of the polymer material using the processes disclosed herein. Another advantage of the present disclosure is that it in some embodiments provides a process and system for treating solid waste comprising water-soluble polymer material that destroys hazardous bloodbome pathogens. Another advantage of the present disclosure is that it in some embodiments provides a process and system for treating solid waste comprising water-soluble polymer material that results in a liquid waste stream having a reduced volume of radioactive contamination. Waste volume reduction factors of greater than 1000 can be achieved with the present disclosure. Another advantage of the present disclosure is that it in some embodiments provides a process and system for treating solid waste comprising water-soluble polymer material that results in a liquid waste stream suitable for tank farm treatment of residual radioactive contamination. Another advantage of the present disclosure is that it in some embodiments provides a process and system for treating solid waste comprising water-soluble polymer material that results in a liquid waste stream having reduced total organic compounds. Another advantage of the present disclosure is that it in some embodiments provides a process and system for treating solid waste comprising water-soluble polymer material that results in a liquid waste stream suitable for discharge to a sanitary sewer.

Other advantages of the present disclosure will become apparent from the following descriptions, taken in connection with the accompanying drawings, wherein, by way of illustration and example, an embodiment of the present disclosure is disclosed.

The water soluble polymer material may come from a variety of sources, some of which include materials manufactured from fiber (woven), non-woven, plastic films, or cast or extrusion molded materials. These materials include such items as garments and other protective clothing, apparel, linens, drapes, towels, sponges, plastic bags, rags, wipes, gauze, utensils, rags, mops and other useful articles. New products that can be solubilized by means of the present invention are developed on monthly basis.

In accordance with the process of the invention for the treatment of solubilized water-soluble polymer material in an aqueous solution, solubilized polymer material is destroyed by an oxidation-reduction reaction that converts the polymer material into new and uniquely different organic compounds that do not exhibit the same physical or chemical characteristics of the original compound. It may be desirable to solubilize the water-soluble polymer in the aqueous solution under pressure at a temperature of between about 220°F (104.4°C) to about 250°F (121.1°C). It may be desirable to filter non-solubilized material from the aqueous solution. It is preferred to maintain the solution temperature at a temperature at or above about 150°F (65.6°C) during filtration. It is desirable to generate free radicals through photochemical interactions or by heating the solution for oxidation-reduction of the polymer material in the solution.

To photochemically generate free radicals, it is preferred to add an oxidizing agent to the solution and then irradiate the solution with electromagnetic radiation.

It is also desirable to generate free radicals by heating the solution to which an oxidizing agent has been added.

In an alternative embodiment for treatment of waste generated from nuclear facilities, a filtration and ion exchange process may be used to remove radioactive material from the solution. Preferably, the step of removing radioactive material is accomplished by filtering the solution through a micron filter which has a nominal pore size ranging between 10 and 100 microns to remove radioactive elements. Optionally, a second particulate filter having a nominal pore size between 0.1 micron and 1.0 micron, a reverse osmosis unit or an ion exchange unit consisting of an anion bed, a cation bed or an anion/cation combination bed that reduces depleted radioisotopes at an elemental level may be also be used. Preferably, the waste stream may also be adjusted to a higher pH. More preferably, the pH adjusted waste stream can also be biodegraded to eliminate the organic acids. If the waste stream is to be biodegraded, it is preferable to neutralize the waste stream by adding sodium hydroxide until the pH is adjusted to within the approximate range of about 6.0 to about 10.0 or more preferably from about 6.0 to 8.0.

In a preferred embodiment, the organic acids produced by oxidizing the aqueous waste stream are depleted through biodegrading the organic acids. Most preferably, if the waste stream is to be biodegraded, the pH is adjusted to within the approximate range of about 6.0 to about 7.0. It is desired to pass the aqueous waste stream through a reverse osmosis unit after the biodegradation. Biodegradation may include inoculating the aqueous waste stream with microorganisms such as aerobic, heterotrophic bacteria or anaerobic bacteria. The inoculated aqueous waste stream may be exposed to an aerated, fluidized bed in a bioreactor which contains support materials such as pulverized, activated carbon or plastic bio beads. The inoculated aqueous waste stream may also be exposed to a fixed media reactor or an activated sludge process. Conventional extended aeration, step aeration, sequential batch reactions and contact stabilization may also be used to reduce the organic carbon content of the inoculated aqueous waste stream.

Preferably, the biological activity of the microorganisms is enhanced by injecting a nutrient containing nitrogen, phosphorus, potassium or a trace mineral into the bioreactor. The final resultant waste stream includes of neutralized water depleted of organic carbon, which is suitable for delivery to a waste treatment facility or for reuse or recycling.

The pH of the aqueous waste stream may be neutralized after producing organic acids by adding a base reagent until the pH is between 6.0 and 10.0 or more preferably between 6.0 and 8.0.

Surprisingly, applicants have found that the oxidation-reduction of PVA by the novel process of the invention can be accomplished much more rapidly than expected (in less than twenty hours), in greater concentrations of PVA than expected, and using substantially less concentrated hydrogen peroxide than one skilled in the art would expect, even given the hindsight of applicants' process steps in advance.

Specifically, an embodiment of the invention comprises a chemical process for treating aqueous waste streams containing polyvinyl alcohol, comprising: (a) adding an oxidizing agent to a polyvinyl alcohol-containing aqueous waste stream; (b) generating hydroxyl radicals from the oxidizing agent; and (c) producing at least one organic acid from the polyvinyl alcohol.

The aqueous waste stream may be heated to a temperature sufficient to dissolve the polyvinyl alcohol in the solution, preferably greater than about 180° Fahrenheit (82.2°C) or greater than about 190° Fahrenheit (87.8°C). It is most preferred that the temperature be at least 212° Fahrenheit (100°C). It is preferred that the solution be heated for at least 30 minutes so as to dissolve the polymer.

In one embodiment of the invention, hydroxyl radicals are generated by irradiating the aqueous waste stream with electromagnetic radiation. The electromagnetic radiation must be of a sufficient wavelength and sufficient intensity to photolytically convert the oxidizing agent to hydroxyl free radicals. One skilled in the art will appreciate that depending upon the wavelength of the commercially available ultraviolet lamps, and the chosen reactor design, the duration of irradiation required to affect substantially complete destruction of the polyvinyl alcohol will vary, and some routine experimentation may be necessary. One of ordinary skill will also appreciate that in addition to variations in the characteristics of the electromagnetic radiation employed, variables of polyvinyl alcohol concentration and concentration of oxidizing agent will result in variations of the duration of irradiation required to affect substantially complete destruction of the polyvinyl alcohol, and some experimentation is necessary. It is preferred that the radiation be ultraviolet (UV), and conducted at a wavelength range of from about 4 nm to 400 nm, more preferably from about 180 nm to about 310 nm or most preferably between 180 and 190 nm.

In another embodiment of the invention, hydroxyl radical are generated by heating the aqueous waste stream to at least 180° Fahrenheit (82.2°C). In this embodiment, the solubilization of PVA may be accomplished at the same time as or prior to the generation of the OH radicals.

For solubilized PVA with hydrogen peroxide as the oxidizing agent, the pH of the resultant solution will decrease measurably during PVA oxidation. The resultant solution will contain water and acetic acid. It is preferred to add concentrated hydrogen peroxide until the overall solution reaches a concentration range of approximately between about 0.05% and about 0.5% by volume. The PVA to be treated should comprise less than about 5% by weight of the solution. The degree of completion of the reaction can be measured by the decrease of the pH of the solution. A complete reaction (destruction of the PVA in solution) is indicated by a pH below at least about 6.0, and a corresponding decrease in the pH of between about 2.7 units to about 3.9 units below the pH of the solubilized solution.

The preferred oxidizing agent is hydrogen peroxide, preferably bulk commercial 30% hydrogen peroxide solution with the overall solution containing from about 0.05 % to 20 % by volume, or more preferably 0.0 5% to 0.5 % by volume hydrogen peroxide, although other oxidizing agents may also be employed. The hydrogen peroxide concentration is preferably 1000-2000 mg/l per 10000 mg/l PVA solution.

The process has been shown to be especially effective wherein the solubilized PVA solution comprises between about 0.5% and about 2.0% PVA, has a starting pH in the approximate range of about 6.8 to about 9.6, using ultraviolet radiation at about 189 nanometers, and wherein the end pH after oxidation-reduction is in the approximate range of about 2.7 to about 3.9 units less than the starting pH. At this time the process is substantially complete. Effective ultraviolet radiation occurs from about 0.9 hours to about 4.5 hours. The average pH drop at which point the process is substantially complete is 2.9 - 3.7 units with an average of 3.3 units.

It may be desirable to measure a parameter indicator of the concentration of water-soluble polymer material in the solution after oxidation-reduction of the solution. In these embodiments, it is preferred to recirculate the solution within a vessel. This allows for repeated electromagnetic irradiation for those embodiments employing electromagnetic irradiation.

The extent of the destruction of the polyvinyl alcohol may be determined by measuring the drop in aqueous waste stream pH after generating hydroxyl radicals or by a colorimetric assay after generating hydroxyl radicals. Colorimetric iodine solution may be employed for the colorimetric assay, and confirmation of the colorimetric may be made by spectrophotometric measurement which will preferably have an absorption maximum of about 690 nm. An excellent colorimetric solution comprises per liter 12.0 g boric acid, 0.76 g iodine, and 1.5 g potassium iodide.

An embodiment of the invention is a chemical process for treating aqueous waste streams containing water-soluble polymeric material, comprising: (a) adding an oxidizing agent to the aqueous waste stream; (b) generating hydroxyl radicals from the oxidizing agent; (c) producing organic acids from the water-soluble polymeric material. The preferred oxidizing agent is hydrogen peroxide and the preferred water-soluble polymeric material is polyvinyl alcohol.

The order of the steps can be altered, for example, the water-soluble polymeric material can be dissolved prior to adding the oxidizing agent, water-soluble polymeric material can be dissolved simultaneously with adding the oxidizing agent, and water-soluble polymeric material can be dissolved after adding the oxidizing agent.

In an embodiment for treating materials that come from a source that may have been exposed to radioactivity, the potentially radioactive materials may be filtered. The filtering can occur prior to adding an oxidizing agent to the aqueous waste stream, after producing organic acids from the water-soluble polymeric material or after biodegrading the organic acids. Filters for removing potentially radioactive material include particulate filter having a nominal pore size of 10 microns to 100 microns and optionally a second particulate filter having a nominal pore size of from 0.1 micron to 1.0 micron through which the waste stream is circulated. Filtering may also comprise circulating the aqueous waste stream through an ion exchange bed. Another embodiment of the preferred invention comprises: (a) filtering potentially radioactive material from the aqueous waste stream; (b) neutralizing the pH of the aqueous waste stream after producing organic acids; and (c) depleting organic acids from the aqueous waste stream after neutralizing the pH.

Another embodiment of the current invention is a chemical process for solubilizing polyvinyl alcohol in an aqueous waste stream, comprising: (a) introducing the waste stream into a solution reactor; and (b) heating the waste stream to a temperature of at least 212°F (100°C) at a constant volume thereby increasing the pressure in the reactor to above atmospheric pressure. The waste stream can comprise from 0.5 to 30 % polyvinyl alcohol by volume or more preferably from 0.5 to 5 % polyvinyl alcohol by volume.

A specific embodiment of this invention comprises a system for the destruction of water-soluble polymers in an aqueous waste stream, comprising: a reactor; an oxidative agent injection system; and a neutralization vessel. An aspect of this invention is that the system is designed for disposal of biomedical waste and further comprises a filter.

The filtration step is preferably accomplished through one or more strainers, each strainer having a mesh size from about 20 mesh to about 50 mesh, and more preferably using an additional strainer of about 30 mesh. The biomedical waste may comprise radioactive materials or biohazardous materials.

The term "biomedical waste" is intended to mean any waste that presents a threat of infection to humans, including non-liquid tissue, body parts, blood, blood products and body fluids from human and other primates; laboratory and veterinary waste which contain human disease-causing agents; discarded contaminated sharps; and used, gloves, absorbent materials or disposable devices contaminated with regulated waste.

For the system in which hydroxyl radicals are created through ultraviolet radiation, the system may be one of several configurations, it can comprise a solution tank and a photochemical reactor, two solutions/reactor tanks or three or more solutions/reactor tank. For the system in which hydroxyl radical are generated through heat, the system comprises at least one solution/reactor tank. In either system, the solution tank can be an autoclave. Solution tanks and the photochemical reactor can be made of corrosive-resistant material such as stainless steel.

The photochemical reactor can be an array of tubes having core elements mounted coaxially therein and will preferably contain a number of spaced ultraviolet elements, each having a quartz shield surrounding an ultraviolet core element and a mechanical mixer. An oxidative agent injection system supplies an oxidative agent to the aqueous waste stream circulating within the photochemical reactor and preferentially has an automatic rotometer which preferentially has a pH recorder, a programmable logic controller, sensor, recorder, and dispensing mechanism. The minimum rate of injection for the injection system is 100 milliliters oxidative agent per 10 gallons of aqueous waste stream. A pump can be used to circulate the contents of the photochemical reactor back into the photochemical reactor and a mixer can be used to circulate the contents of the photochemical reactor.

In an embodiment of the invention, the solution tank may further comprise immersion heaters or pumps which circulate the contents of the solution tank through a heat exchanger and back into the solution tank. The heat exchanger can be air-cooled.

A pump can be used to circulate the contents of the neutralization vessel back into the neutralization vessel. The neutralization vessel comprises an automatic pH controller that achieves the desired pH by injecting sodium hydroxide into the neutralization vessel and thereby controls the neutralization of the aqueous waste stream in the neutralization vessel.

It is an aspect of the invention wherein the system comprises a bioreactor. The bioreactor typically comprises: 1, 2, 3, 4, 5, 6 or more bio cells; nutrient/microbe injection pumps; an air supply which provide a constant flow of air through the media; and pumps or gravity feed headers which allow for transfer between bio cells. A recirculation pump which circulates the contents of each bio cell may be used. Preferably, each recirculation pump recirculates the treated water with a recycle:feed ratio of about 5:1. Entrance to the bio cells will preferably accommodate for the administration of air, microbes, and nutrients to the bio cells. The bio cells are preferably connected in series. The bio cells are comprised of aerobic bioreactors inoculated with microorganisms comprised substantially of aerobic, heterotrophic bacteria or anaerobic bacteria. Preferably, the bioreactor comprises a combination of both fixed media and fluidized bed bio cells.

In the same manner as described above, where the solution contains PVA to be treated, 30% commercial concentration hydrogen peroxide is added until the overall aqueous solution prior to irradiation has from about 0.05% to about 0.5% hydrogen peroxide. The process of irradiation continues until there is a substantial pH drop indicating the PVA has been reduced to acetic acid, generally a decrease of about 2.5 units to about 4.0 units, preferably about 3.0 units to about 3.5 units, with a mean of about 3.3 pH units. Either heat or ultraviolet radiation is preferably employed, with a wavelength of the radiation ranging from about 4 nm to about 400 nm, most preferably about 180 nm to about 310 nm or most preferably about 180 nm to 190 nm. Again, confirmation of substantial completion of the reaction is accomplished by colorimetric assay, preferably using the colorimetric iodine solution mentioned above.

## BRIEF DESCRIPTION OF THE DRAWINGS

The drawings constitute a part of this invention and include exemplary embodiments to the invention, which may be embodied in various forms. It is to be understood that in some instances various aspects of the invention may be shown exaggerated or enlarged to facilitate an understanding of the invention.

FIG. 1 is a process flow diagram as it applies to a preferred embodiment for the destruction and treatment of waste streams comprising water-soluble polymers.

FIG. 2 is a diagram of what is believed to be the reactions that occur during the photochemical reaction phase of the process.

FIG. 3 is a chart showing test results of the pH response of the solution during photochemical acidification of PVA to acetic acid.

FIG. 4 is a diagram of what is believed to be the reactions that occur during the biodegradation phase of the process.

FIG. 5 is a chart demonstrating test results of the total organic carbon removed from solution at the various process steps of a preferred embodiment.

FIG. 6 is a schematic of the system of a preferred embodiment as designed to perform the process steps detailed in FIG. 1.

FIG. 7 is a detailed schematic of a prototype system of a preferred embodiment as designed to perform the process steps detailed in FIG. 1.

FIG. 8 is a process flow diagram of a fixed media bioreactor system.

FIG. 9 is a process flow diagram for the activated sludge process of conventional extended aeration.

FIG. 10 is a process flow diagram for the activated sludge process of step aeration.

FIG. 11 is a process flow diagram for the activated sludge process of contact stabilization.

FIG. 12 is a process flow diagram for the activated sludge process of a sequential batch reaction.

## DETAILED DESCRIPTION OF ILLUSTRATIVE EMBODIMENTS

The following description is presented to enable any person skilled in the art to make and use the invention, and is provided in the context of a particular application and its requirements. Various modifications to the disclosed embodiments will be readily apparent to those skilled in the art, and the general principles defined herein may be applied to other embodiments and applications without departing from the spirit and scope of the present disclosure. Thus, this disclosure is not intended to be limited to the embodiments shown, but is to be accorded the widest scope consistent with the principles and features disclosed above.

### A. The Process of the Preferred Embodiments

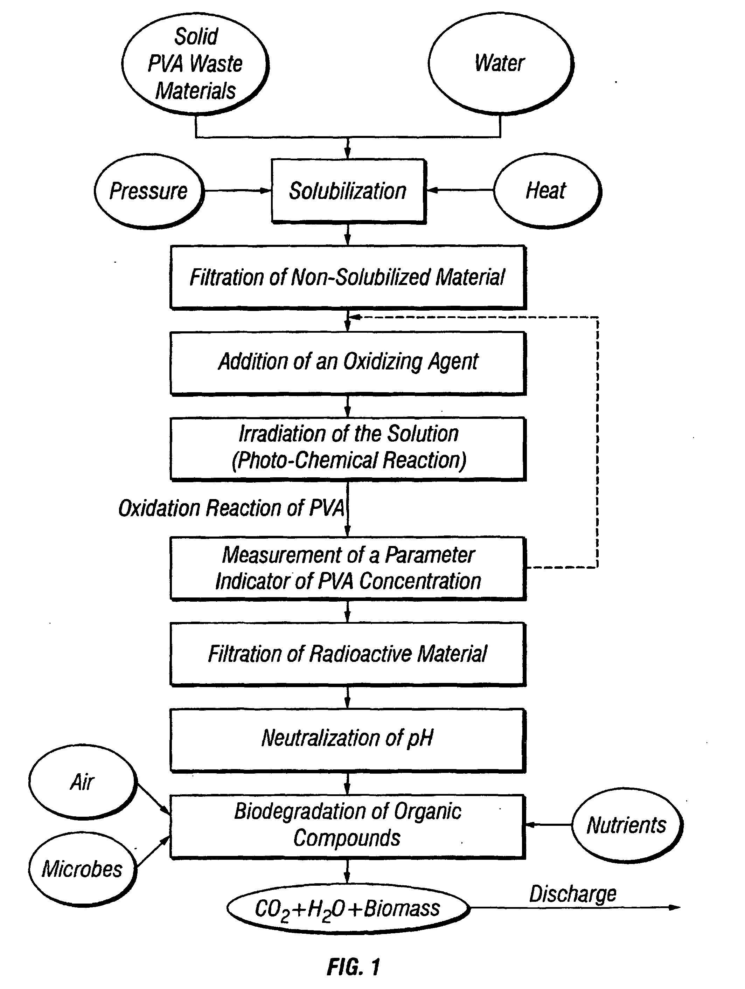

The following description contains the description of process steps, and it is not to be construed or interpreted as means-plus-function claim language. Referring to FIG. 1, the reference to PVA waste is as to water-soluble polymer waste material. In FIG. 1, the combined process steps of a preferred embodiment of the present disclosure are shown to include the steps of:

1) If required, solubilizing water-soluble polymer material in an aqueous solution;

2) Filtering non-solubilized material from the aqueous solution;

3) Adding an oxidizing agent to the filtered solution;

4) Creating free radicals in the solution to destroy the water-soluble polymer material and form organic acid;

5) If necessary, measuring a parameter indicator of the concentration of polymer material in the solution;

6) If necessary, filtering radioactive material from the solution;

7) If necessary, neutralizing the pH of the solution; and'

8) If necessary, biodegrading the organic acids in the solution to form $CO_2$, $H_2O$ and biomass.

The first process step in this preferred embodiment comprises solubilization of water-soluble polymer material in an aqueous solution. In a more preferred embodiment, this step is accomplished by pressure-cooking water-soluble polymer waste material in a bath of high-temperature water at a constant volume, such as by autoclaving. In a still more preferred embodiment, the vessel contains the water-soluble polymer waste material and can be heated to a temperature in a range of between about 220°F (104.4°C) to about 250° Fahrenheit (121°C) under saturation pressure. It is found that by pressure-cooking the solid polymer material in an aqueous solution, the pressurized conditions allow for achievement of higher solution temperatures than can be achieved in ambient air without boiling. The higher temperature of the solution transfers more heat energy to the solid polymer material, and the increased heat energy more effectively penetrates solid masses of polymer materials to dissolve them completely. Further, the higher temperatures of the autoclave achieve a sterilization of the waste stream that cannot be achieved at lower temperatures.

In an alternative embodiment, a solubilized waste stream of water-soluble polymer material in an aqueous solution is otherwise provided as, for example, by the current practice described in the background of this invention. In that case, the advantages of the process steps of the invention may begin with the second process step.

The second process step in this preferred embodiment comprises filtration. After receiving a solubilized solution of polymer material, or alternatively, after solubilizing solid polymer material as described above, the solution is preferably filtered through strainers to remove any undissolved polymer material and non-water-soluble polymer constituents in the solution. In a preferred embodiment, the strainers will have a mesh size in an approximate range of between about 20 and about 50 mesh. In a more preferred embodiment, the strainers will have a mesh size of approximately about 30 mesh. Undissolved polymer material trapped in the strainers can be recirculated for final solubilization. In a preferred embodiment, polymer material will constitute an approximate range of between about 0.5 to about 5.0% by weight in the solution. In a more preferred embodiment, polymer material will constitute an approximate range of between about 0.5 to about 2.5% by weight in the solution. In the most preferred embodiment, the temperature of the solution during the filtration process step is maintain at or above about 150 °F to prevent precipitation of the PVA out of solution prior to its destruction.

The third process step in this preferred embodiment comprises addition of an oxidizing agent to the solution. In a preferred embodiment, hydrogen peroxide is the oxidizing agent added. For example, commercially available 30% hydrogen peroxide may be conveniently added to form an overall process solution concentration of approximately about 0.2% by volume. Hydrogen peroxide suitable for the application is commercially available as CAS No. 7722-84-1, and may be purchased from a number of sources including VWR Scientific Products, West Chester, PA. 19380, Catalog No. VW 9742-1. In the more preferred embodiment, the concentration of hydrogen peroxide in the solution is within an approximate range of between about 0.05% and about 0.5% by volume.

The fourth process step of generating hydroxyl radicals in the solution has two preferred embodiments. One preferred embodiment of this step comprises irradiation of the solution with electromagnetic radiation. This process step results in a photochemical reaction predetermined as photolysis. Photolysis is chemical decomposition by the action of radiant electromagnetic energy. Ultraviolet radiation is electromagnetic radiation in the wavelengths from about 4 nanometers (nm), to about 400 nm. In a preferred embodiment, ultraviolet radiation between the wavelengths of approximately about 180 nm and about 250 nm is used. In this process step, the exposure of the hydrogen peroxide in the solution to electromagnetic energy in the wavelengths of ultraviolet radiation, results in the photolysis of the hydrogen peroxide into hydroxyl free radicals (OH$^{\bullet}$) as shown in the following equation:

$$2H_2O + h\nu \Rightarrow 2OH^{\bullet}$$

where "h" represents Planck's constant (6.6261 x $10^{-34}$ joule-second), and "v" represents the frequency of the ultraviolet radiation. OH$^{\bullet}$ is the hydroxyl free radical. The hydroxyl radicals present a very aggressive oxidizing environment in which the hydroxyl free radicals attack the organic constituents of the liquid stream, thereby initiating an oxidative cascade of reactions, including the complete destruction of the polymer material in solution. The components of the polymer material predominantly forms simple organic acids.

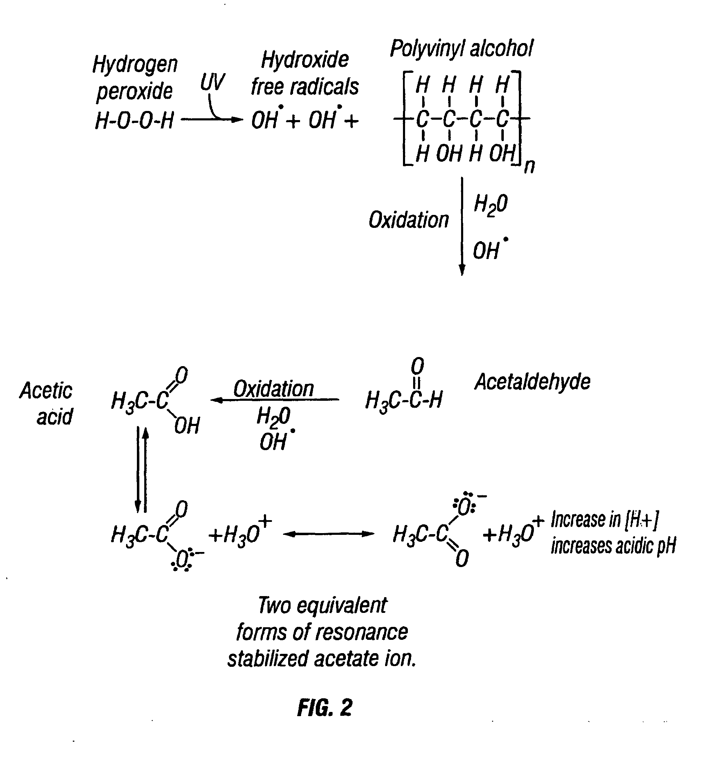

FIG. 2 is a diagram of what is believed to be the reactions that occur during the primary photochemical reaction phase of the process. From FIG. 2, it can be seen that by means of an oxidation reaction, the polyvinyl alcohol is destroyed, resulting in an organic acid waste stream comprising water and acetic acid. Prior art demonstrates that virtually all organic compounds will be oxidized at about $10^6$ to about $10^9$ times faster when reacted with hydroxyl radicals (OH$^{\bullet}$) than oxidation reactions utilizing hydrogen peroxide or ultraviolet radiation separately. One skilled in the art will appreciate that the third process step comprising addition of an oxidizing agent to the solution, and the fourth process step comprising irradiation of the solution, can be readily combined to occur simultaneously and within a singular reaction vessel.

In another embodiment of the fourth process step, heat is used to convert the hydrogen peroxide in the solution into free hydroxyl radicals (OH$^{\bullet}$). The hydroxyl radicals present a very aggressive oxidizing environment in which the hydroxyl free radicals attack the organic constituents of the liquid stream, thereby initiating an oxidative cascade of reactions, including the partial or complete destruction of the polymer material in solution. The temperature needed to convert the hydrogen peroxide to hydroxyl radicals is at least 190 °F. In embodiments using this heat to generate free hydroxyl radicals in the fourth process step, it is preferred that the second process step involving the filtration of the solution occurs after the conversion of hydrogen peroxide into free hydroxy radicals.

The fifth process step in this preferred embodiment comprises the measurement of a parameter indicator of the concentration of the polymer material in solution. This step is only necessary when it is necessary to determine the progress or completion of the destruction of the polymer material in the solution. Based on the results of the measurement, the steps of adding an oxidizing agent to the solution and irradiating the solution with ultraviolet radiation or heating to generate the free radical may be repeated until substantially all of the polymer material has been destroyed if that level of destruction is desired. Referring to FIG. 2, it is seen that the oxidation-reduction reaction of PVA results in the formation of two equivalent forms of resonance stabilized acetate ion, and an increase in free hydrogen ions. An increase in hydrogen ion concentration in the solution increases the acidity of the solution. Thus, in the more preferred embodiment, the concentration of PVA remaining in solution subsequent to the process step of generating the free radical, is measured by the incremental reduction of the pH of the solution.

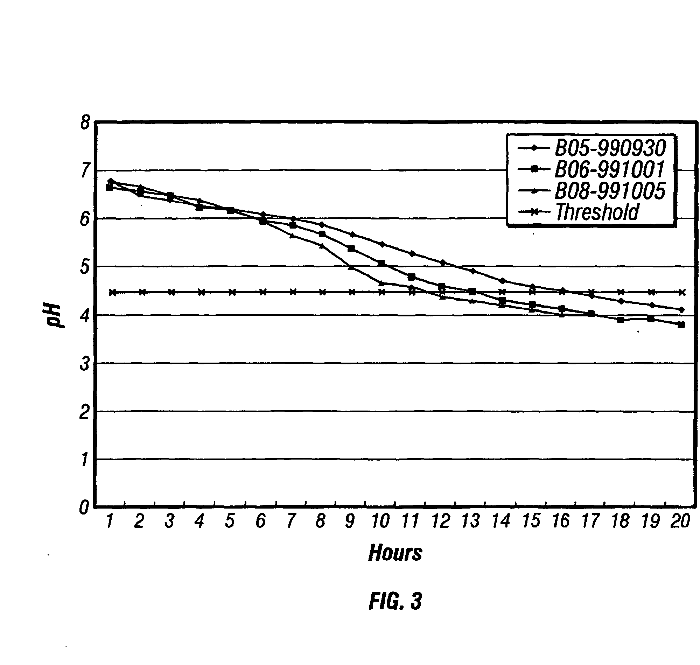

FIG. 3 is a chart showing test results indicating the pH response of the solution during photochemical acidification of PVA to acetic acid. Due to the uniform nature of the oxidation-reduction reaction of PVA to organic acids, it is possible to predict the end point of the reaction (destruction of PVA) by measuring the decrease in the pH of the recirculating irradiated solution. The pH indication of the end point of the reaction is a function of the initial pH of the solution. For example, when the pH of the solubilized PVA solution is in the approximate range of about 6.8 to about 9.6, oxidation (destruction) of the PVA in the solution has been found to be substantially complete when the pH of the solution reaches approximately 4.6. In a preferred embodiment, the irradiation of the solution described in the fourth process step is continued until the pH of the irradiated solution is between about 2.7 units and about 4.0 units less than the pH of the solubilized PVA solution before irradiation. In a more preferred embodiment, the irradiation of the solution is continued until the pH of the irradiated solution is between about 2.9 units and about 3.7 units less than the pH of the solubilized PVA solution before irradiation.

Alternatively, the destruction of PVA may be confirmed by colorimetric assay of the PVA concentration in solution. Measurement by colorimetric assay may also be done in combination with measurements of pH. Note Amended Assay by Joseph H. Finley, "Spectrophotometric Determination of Polyvinyl Alcohol in Paper Coatings," Analytical Chemistry, 33(13) (December 1961), and the colorimetric iodine solutions taught therein, including a preferred solution using 12.0 g boric acid, 0.76 g iodine and 1.5 g potassium iodide per liter. Preferably, spectrophotometric measurement of the polyvinyl alcohol occurs at its absorption maximum of 690 nm. The assay may be completed by: placing 20.0 ml colorimetric iodine solution in cuvette; adding 0.5 ml sample; incubating the solution at 25°C for five minutes. Spectrophotometric measurement is made at the absorption maximum, 690 nm using a Hach DR2010 spectrophotometer. Standard solutions of polyvinyl alcohol may be prepared and a standard curve prepared using up to 2.5% concentrations of PVA in solution. The calibration curve may be derived from the absorption values at 690 nm (at 25°C) plotted against the quantity of PVA per assay.

The sixth process step comprises the filtering and depletion of radioactivity in solution. This process step is optional and only applicable when the water-soluble polymer material contains potentially radioactive waste. This step may or may not be required, for example, at a nuclear facility. If the polymer material was exposed to radioactivity that affects the disposability of the solution, then this process step should be added. With the addition of this process step, a low-level radioactive waste management system is created. This waste management system can be used as an alternative approach to current dry active radioactive waste treatment methods.

The process step of removal of radioactivity typically occurs between the process steps of photochemical reaction and biological degradation. A more detailed preferred embodiment of this process step includes the basic steps of:

a) filtration of the solution, and

b) ion exchange of the solution

At nuclear facilities, radioactivity may be present in process fluids in both elemental and particulate form. Filtration of the solution removes radioactive particulates. In a preferred embodiment, the solution is passed through a particulate filter having a nominal pore size ranging approximately between about 10 and about 100 microns. In a more preferred embodiment, the solution is then passed through a second particulate filter having a nominal pore size ranging approximately between about 0.1 micron and about 1.0 micron.

The ion exchange step depletes the soluble radioactive species, or elemental radioisotopes, that remain after microfiltration, making the solution suitable for disposal or further treatment. In a preferred embodiment, the solution is directed through an ion exchange vessel that contains ion exchange resin in the form of anion, cation bed or a combination thereof. During this process step, radioactive ions in solution will exchange places with the non-radioactive ions attached to the resin in solid form. The radioactive material collects on the resin, leaving the solution suitable for discharge or reuse as desired.

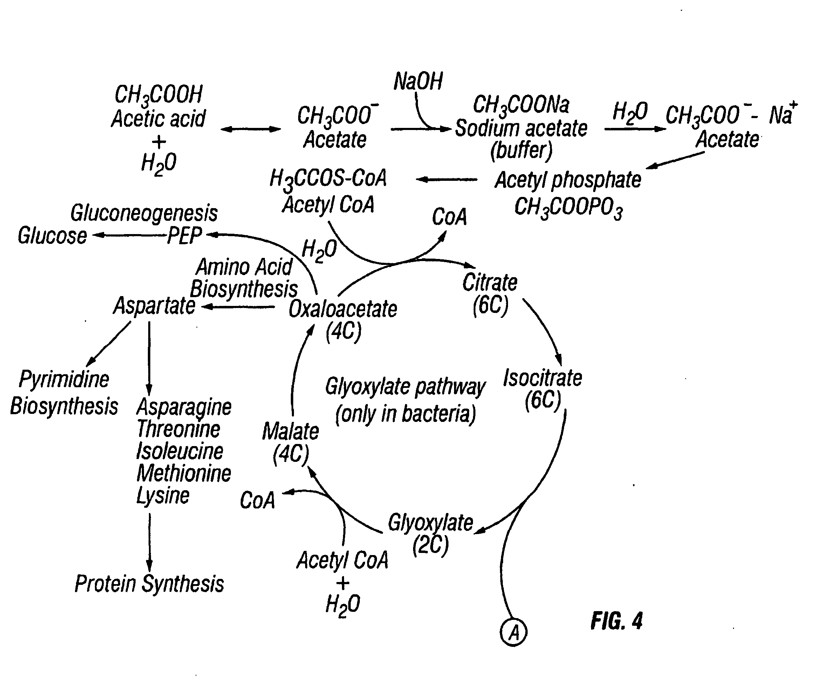

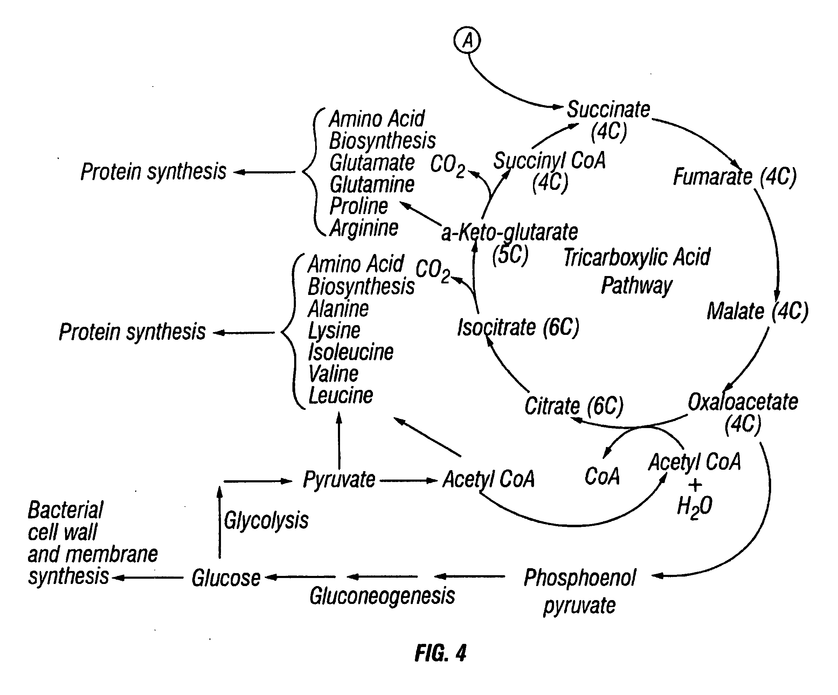

The seventh process step in this preferred embodiment is the neutralization of the pH of the solution. In a preferred embodiment, the resultant organic acid solution is pH neutralized by addition of a base reagent. In a more preferred embodiment, sodium hydroxide is the base reagent used to raise the pH to an approximate range of between about 6.0 and about 10.0. In another more preferred embodiment, when the solution will be biologically treated such as described in the eighth process step (below), sodium hydroxide is the base reagent used to increase the pH to within an approximate range of between about 6.0 and about 8.0. As can be seen at the top of FIG. 4, the sodium hydroxide combines with the acetate of the acetic acid in the solution to form a sodium acetate buffer, which is important to the biodegrading process step. In the most preferred embodiment, the pH of the resultant organic acid waste stream is neutralized to within an approximate range of between about 6.0 and about 7.0.

For all purposes of this application, the term "neutralization" is intended to mean increasingly adjusting of the pH of an acidic solution to a more basic alkaline solution having a pH of approximately between about 6.0 and about 10.0.

The eighth process step in this preferred embodiment comprises the removal of dissolved and colloidal organic carbon compounds that remain in the aqueous stream after oxidation.

The neutralized solution of destroyed polymer material has a high carbon compound content that may render it unfit for discharge to sanitary sewer systems. Total organic carbon (TOC) is a direct measurement of the concentration of the organic material in solution. Biochemical oxygen demand (BOD) is a measure of the oxygen required for the total degradation of organic material and/or the oxygen required to oxidize reduced nitrogen compounds. Chemical oxygen demand (COD) is used as a measure of the oxygen equivalent of the organic matter content of a sample that is susceptible to oxidation by a strong chemical oxidant. One or more of these parameters are commonly used by publicly operated treatment facilities to regulate effluent waste streams.

Biodegradation of the organic acids in the solution is used to remove organic carbon compounds. In this process step, the neutralized solution is inoculated with microorganisms. The microorganisms utilize the organic acids produced by the oxidation-reduction of the water-soluble polymer material as a carbon and energy source. In a preferred embodiment, the microorganisms are comprised substantially of aerobic, heterotrophic bacteria. These forms of bacteria are known to those in the art and are readily available. Treated-PVA Degradation Organisms may include:

*Arthrobacter ilicis*
*Bacillus amyloliquefaciens*
*Bacillus pumilus GC subgroup B*
*Bacillus subtilis*
*Brevibacterium mcbrellneri*
*Comamonas testosteroni*
*Flavobacterium resinovorum*
*Kocuria kristinae*
*Microbacterium liquefaciens*
*Micrococcus luteus GC subgroup C*
*Pseudomonas balearica*
*Pseudomonas chlororaphis*
*Pseudomonas putida biotype A*
*Pseudomonas pseudoalcaligenes*
*Rhodococcus equi GC subgroup B*

All organisms may be purchased from Advanced Microbial Solutions, 801 Highway 377 South, Pilot Point, TX 76258. The following organisms may be purchased from the American Type Culture Collection, 12301 Parklawn Drive, Rickville, MD 20852 (http://www.atcc.org):

*Arthrobacter ilicis*
*Bacillus amyloliquefaciens*
*Bacillus pumilus GC subgroup B*
*Bacillus subtilis*
*Brevibacterium mcbrellneri*
*Comamonas testosteroni*
*Flavobacterium resinovorum*
*Kocuria kristinae*
*Microbacterium liquefaciens*
*Micrococcus luteus GC subgroup C*

*Pseudomonas chlororaphis*
*Pseudomonas putida biotype A*
*Pseudomonas pseudoalcaligenes*
*Rhodococcus equi GC subgroup B*

The aerobic, heterotrophic bacteria metabolize the organic acids in the solution, thus reducing the COD of the solution and rendering it dischargeable to sanitary sewer systems. A preferred Experimental Growth medium used in treated-PVA experiments for a healthy and sustainable bacteria population, per liter $H_2O$ comprises:

| | |
|---|---|
| Acetic acid | 0.5% |
| Molasses | 0.002% |
| $(NH_4)_2SO_4$ | 1.0 g |
| $KH_2PO_4$ | 1.0 g |
| $K_2HPO_4$ | 0.8 g |
| $MgSO_4\ 7H_2O$ | 0.2 g |
| NaCl | 0.1 g |
| $CaCl_2\ 2H_2O$ | 0.2 g |
| $FeSO_4$ | 0.01 g |
| $Na_2MoO_4\ 2H_2O$ | 0.5 mg |
| $MnSO_4$ | 0.5 mg |
| Yeast extract | 10.0 g |

Applicants recommend adjusting the pH to about 7.5 and grow organisms at 25°C. In a more preferred embodiment, the solution is directed to a pulverized activated carbon (PAC) chamber comprising an aerated, fluidized bed of PAC. The pulverized carbon becomes a suspended substrate for bacterial growth. When the TOC is reduced to the desired level below local regulatory limitations, the biologically treated solution can be decanted and released for discharge.

FIG. 4 is a diagram of what are believed to be the reactions that occur during the biodegradation phase of the process, but these are only the opinions of the applicants and not intended to limit the scope of the present invention. As can be seen in FIG 4, acetate of acetic acid in solution combines with sodium hydroxide to form sodium acetate. The sodium acetate is converted to acetyl CoA, a coenzyme commonly employed for the conversion of carbon compounds to carbon dioxide and water. Specifically, acetyl CoA enters into a glyoxylate pathway (found only in bacteria) and into a tricarboxylic acid pathway. Other vital processes dependent upon these two pathways for precursor molecules include amino acid biosynthesis, and pyrimidine biosynthesis (precursors of DNA). The process of gluconeogenesis is indispensable and must be initiated in order for the bacteria to replenish the supply of glucose in the microorganism. Glucose is needed for the synthesis of bacterial cell walls and membranes and also serves as a substrate for glycolysis, the cellular process that generates energy compounds for biosynthesis.

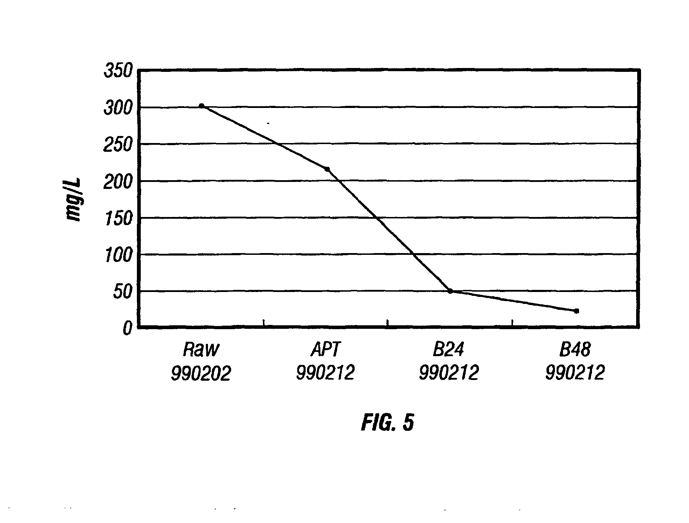

FIG. 5 is a chart demonstrating test results of the total organic carbon removed from solution at the various process steps of a preferred embodiment.

There are various methods that can be used to implement secondary biological treatment for the removal of organic carbon from the processed PVA aqueous phase. These methods include using a fixed media reactor and an activated sludge process such as conventional extended aeration, step aeration, sequential batch reactions, contact stabilization, or fluidized bed reactors. Reverse osmosis can be used in addition to the above mentioned methods when processed PVA water must be maintained in a closed loop system.

**B. Second Process of the Preferred Invention**

A second preferred embodiment of the present disclosure includes the step of:

1) Adding an oxidizing agent to an aqueous solution containing the water-soluble polymer material;

2) Solubilizing water-soluble polymer material in an aqueous solution while simultaneously creating free radicals to destroy the water-soluble polymer material and form organic acid;

3) Filtering non-solubilized material from the aqueous solution;

4) If necessary, measuring a parameter indicator of the concentration of polymer material in the solution;

5) If necessary, filtering radioactive material from the solution;

6) If necessary, neutralizing the pH of the solution; and

7) If necessary, biodegrading the organic acids in the solution to form $CO_2$, $H_2O$ and biomass.

The first process step in this preferred embodiment comprises addition of an oxidizing agent to the solution containing the water-soluble polymer. In a preferred embodiment, hydrogen peroxide is the oxidizing agent added. For example, commercially available 30% hydrogen peroxide may be conveniently added to form an overall process solution concentration of approximately between about 0.05% and about 20% by volume or more preferably about 3.0% by volume.

The second process step in this preferred embodiment comprises heating the solution containing the water-soluble polymer and the oxidizing agent at a temperature and length of time sufficient to dissolve the polymer and form radical species from the oxidizing agent. This is preferably accomplished by pressure-cooking water-soluble polymer solution in a bath of high-temperature water at a constant volume, such as by autoclaving. In a still more preferred embodiment, the vessel contains the water-soluble polymer solution and can be heated to a temperature in a range of between about 212°F (100°C) to about 250° Fahrenheit (121.1°C) under saturation pressure. It is found that by pressure-cooking the solid polymer material in an aqueous solution, the pressurized conditions allow for achievement of higher solution temperatures than can be achieved in ambient air without boiling. The higher temperature of the solution transfers more heat energy to the solid polymer material, and the increased heat energy more effectively penetrates solid masses of polymer materials to dissolve them completely. Further, the higher temperatures of the autoclave achieve a sterilization of the waste stream that cannot be achieved at lower temperatures. The high temperature used in pressure-cooking the water-soluble polymer solution is sufficient to cause chemical decomposition of the hydrogen peroxide and form hydroxyl free radicals ($^{\bullet}$OH). The hydroxyl free radicals attack the organic constituents of the solution stream as the polymer dissolves, thereby initiating an oxidative cascade of reactions, including the complete destruction of the polymer material in solution.

Process steps three through seven of this embodiment are identical to process steps two and five through eight respectively of the previous embodiment of the invention.

**C. Apparatus for Performance of Process of the Preferred Embodiments**

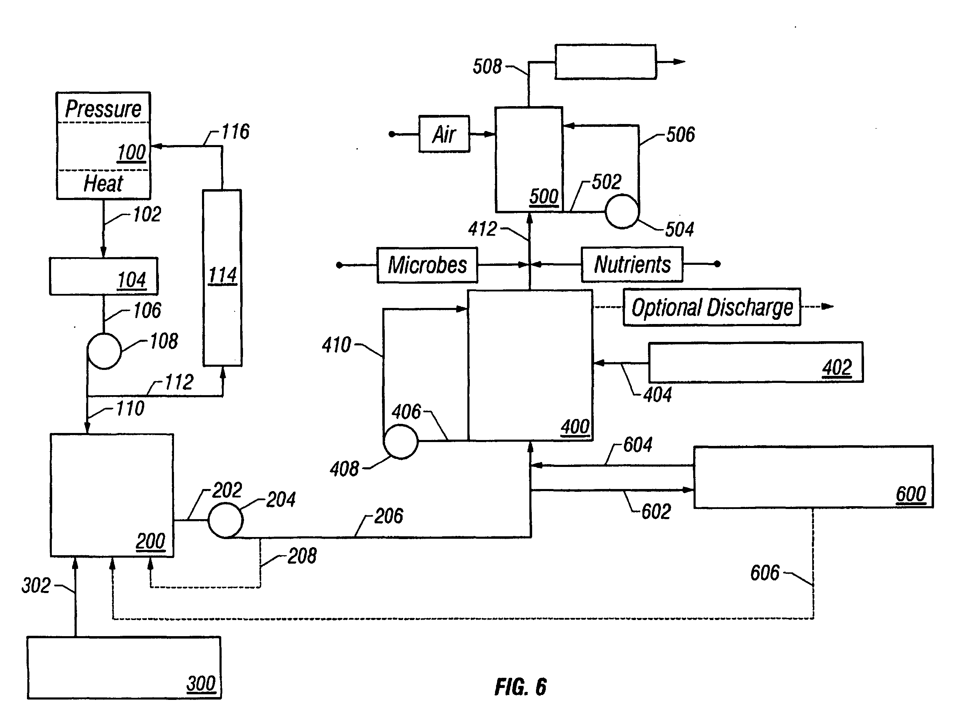

A system is disclosed for destruction of PVA in accordance with the process disclosed above. Referring to FIG. 6, the reference numeral **100** refers generally to a solution vessel. In a preferred embodiment, solution vessel **100** is an autoclave. Solution vessel **100** is preferably made of stainless steel or similarly corrosively resistant material. Solution vessel **100** is connected by a plumbing line **102** to a filter system **104**. Fitter system **104** is connected by plumbing line **106** to a pump **108**. In a preferred embodiment, a plumbing line **112** intersects and connects plumbing line **110** to a heat exchanger **114**. Heat exchanger **114** is connected by a plumbing line **116** back to solution vessel **100** to form a recirculating communication.

Pump **108** is connected by a plumbing line **110** to a photochemical reaction vessel **200**. Reaction vessel **200** is preferably made of stainless steel or similarly corrosively resistant material. In a preferred embodiment, photochemical reaction vessel **200** is comprised of a bank of individual photochemical reactors (not shown) arranged in an array within the reaction vessel. In this embodiment, a mechanical mixer (not shown) is located within reaction vessel **200** to provide circulation of the contents. Each of the reactors comprising at least one high-intensity ultraviolet lighting element. In a more preferred embodiment, the photochemical reactors within reaction vessel **200** generate ultraviolet radiation in the wavelengths between about **185** and about **250** nanometers.

An oxidative agent injection system **300** is connected by a plumbing line **302** to reaction vessel **200**. In a preferred embodiment, oxidative agent injection system **300** comprising a programmable logic controller, sensor, recorder, and dispensing mechanism, such as is well known in industrial chemistry. Photochemical reaction vessel **200** is connected by a plumbing line **202** to a pump **204.** Pump **204** is connected by a plumbing line **206** to a neutralization vessel **400**. In an optional embodiment, a plumbing line **208** intersects plumbing line **206** and is connected to reaction vessel **200** to permit pump operated re-circulating photochemical treatment of the solution.

A pH neutralizing system **402** is connected by a plumbing line **404** to neutralization vessel **400**. In a more preferred embodiment, pH neutralizing system **402** comprising an automatic pH controller. Neutralization vessel **400** is connected by a plumbing line **406** to a pump **408**. Pump **408** is connected by a plumbing line **410** back to neutralization vessel **400** to form a recirculating communication. Neutralization vessel **400** is connected by a plumbing line **412** to bio cells **500**. Bio cells **500** are preferably of the fixed media aerobic type or activated sludge processes. Entrance accommodations are made for administration of air, microbes and nutrients to the bio cells by any means well known in the industry. Bio cells **500** are connected by a plumbing line **502** to a pump **504**. Pump **504** is connected by a plumbing line **506** back to bio cells **500** to form a recirculating communication. Bio cells **500** are connected by a plumbing line **508** for discharge.

In an alternative preferred embodiment, a plumbing line **602** intersects and connects plumbing line **206** to a radioactive material filtration system **600.** Radioactive material filtration system **600** is connected by a plumbing line **604** back to plumbing line **206** to form a circulating communication. Optionally, radioactive material filtration system **600** is connected by a plumbing line **606** back to reaction vessel **200** to form a recirculating communication by which depletion of radioactivity in solution can be performed coincident with oxidation-reduction of the solution. Radioactive material filtration system **600** may alternatively be connected within the disclosed system at any position between solution vessel **100** and neutralization vessel **400.**

Secondary biological treatment is used for the removal of organic carbon from the processed PVA aqueous phase. The preferred methods include using a fixed media reactor and an activated sludge process such as conventional extended aeration, step aeration, sequential batch reactions, contact stabilization, or fluidized bed reactors. When processed PVA water must be maintained in a closed loop system, reverse osmosis can be used in addition to the above mentioned methods.

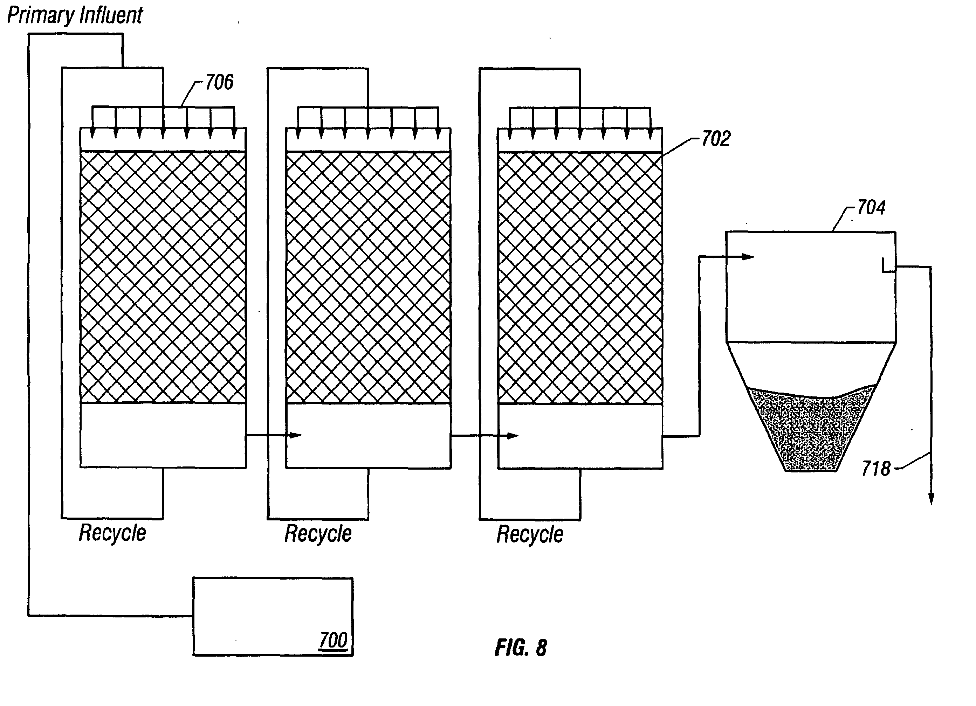

**Fixed Media Reactor -** An aerobic treatment process that consists of uniform distribution of wastewater over a fixed (i.e. stationary) media by means of flow distributor 706 within one or more vertical cells (FIG. 8). The media will be constructed of material that provides the greatest specific surface area and percent void space. Greater surface area permits a larger mass of bacterial biofilm per unit volume, while increased void space allows for higher hydraulic loadings and enhanced oxygen transfer.

A large portion of the wastewater applied to the fixed media passes rapidly through it to the secondary clarifier **704**, while the remainder trickles slowly over the surface of a bacterial biofilm growing on the fixed media **702**. Total organic carbon (TOC) removal occurs by biosorption and coagulation from the rapidly moving portion of the flow and by the progressive removal of soluble organic constituents from the more slowly moving portion of the flow through biochemical oxidation.

The quantity of bacterial biofilm produced is controlled by the available food, and the growth will increase as the organic load increases until a maximum thickness is reached or the mass organic loading exceeds the design fixed media surface area required for dissolved oxygen exchange. This maximum growth is controlled by hydraulic rate, type of fixed media, organic constituent, amount of essential nutrients present, and the nature of the particular biological growth. Retention time within the system is a function of influent hydraulic loading and cell recycle rate. In a fixed media reactor system, the re-circulation ratio is from 3:1 up to 5:1 (recycle to hydraulic load).

The major application of fixed media reactors in the treatment of processed aqueous PVA would be for high-strength, non-radioactive waste streams. Fixed media reactors may handle volumetric TOC loadings of 50 to 100-lbs./1,000 cu. ft. of media surface area and hydraulic loadings of 0.5-to 1.5-gpm/sq. ft. while achieving TOC removal rates of up to 90% (U.S. EPA, Technology Transfer, 1974).

**Activated Sludge Process -** The activated sludge process has been adapted into many wastewater treatment designs and is one of the best established and widespread biological wastewater treatment processes in the world for industrial wastewater, and its adaptability to accommodate new demands in effluent quality is significant (Burgess, *et al*., 2000). The activated sludge process uses microorganisms in suspension to biochemically oxidize soluble and colloidal organics such as processed aqueous PVA to carbon dioxide and water in the presence of molecular oxygen. During the oxidation process, a portion of the organic material is synthesized into new cells. A part of the synthesized cells then undergo auto-oxidation in the aeration chamber; the remainder form new cells (biomass) or excess sludge. Oxygen is required in the process to support the oxidation and synthesis reactions. To operate any application of the activated sludge process on a continuous basis, the bio-solids generated must be separated prior to discharge of the decant portion with the major fraction being recycled to the aeration chamber, and the excess sludge being withdrawn for further handling and disposal.

Examples of activated sludge process design adaptations that may be used for secondary biological treatment within the context of this invention include: conventional extended aeration, step aeration, sequential batch reaction, contact stabilization and fluidized bed reactors.

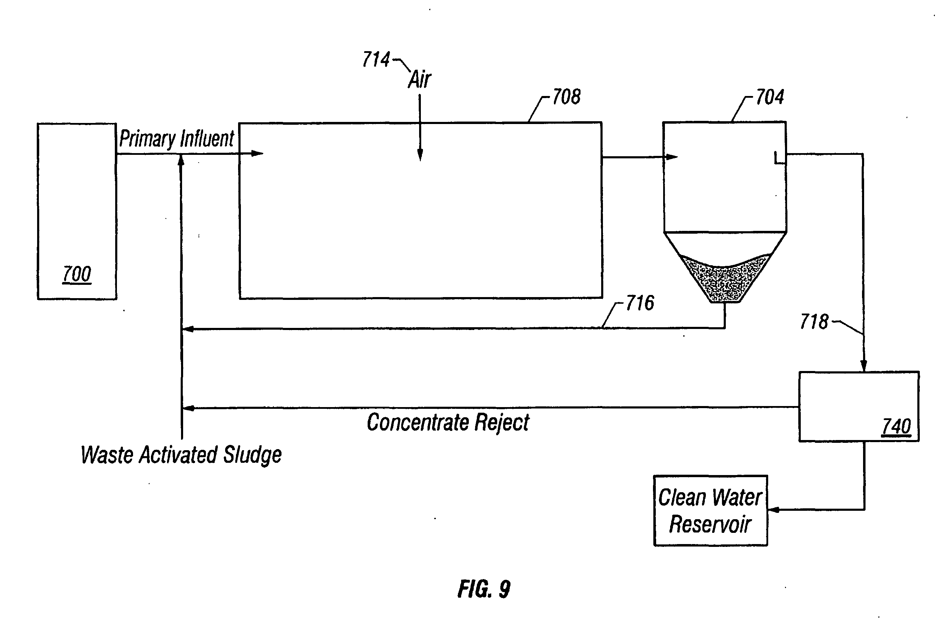

**Conventional Extended Aeration -** In a conventional extended aeration system used for secondary biological treatment of processed PVA, wastewater is pumped from primary processing **700** and pH control into an aerobically mixed aeration chamber **708** followed in series by a secondary clarifier **704** (FIG. 9). At the head end of the aeration chamber influent, wastewater is mixed with a split stream of return activated sludge **716**. The design of the air distribution system within the chamber prevents short-circuiting of the waste stream across the unit and extends retention time by forcing the water to take the longest route through the chamber. Wastewater entry into the aeration chamber displaces mixed liquor (mixed water and biomass) into the secondary clarifier **704**, where the flocculated biomass settles into sludge **716** and clarified final effluent **718**. The treated water portion is discharged across a surface effluent layer.

The design of a conventional extended aeration system for the treatment of processed PVA is based upon volumetric loadings of 20 to 40 lbs (9.1 to 18.1 kg) TOC/day/1,000 cu. ft. (28.3 m$^3$) of aeration chamber capacity and organic loadings (food to microorganisms, F/M) of 0.2 to 0.4 lbs (0.091 to 0.181 kg) TOC/day/lb (0.45 kg) mixed liquor suspended solids (MLSS). Sludge retention time (SRT) may vary due to nutrient loading, but should normally range between 5 to 15 days for this process that may achieve 85 to 95 percent TOC removals with proper operation(U.S. EPA, Technology Transfer, 1974).

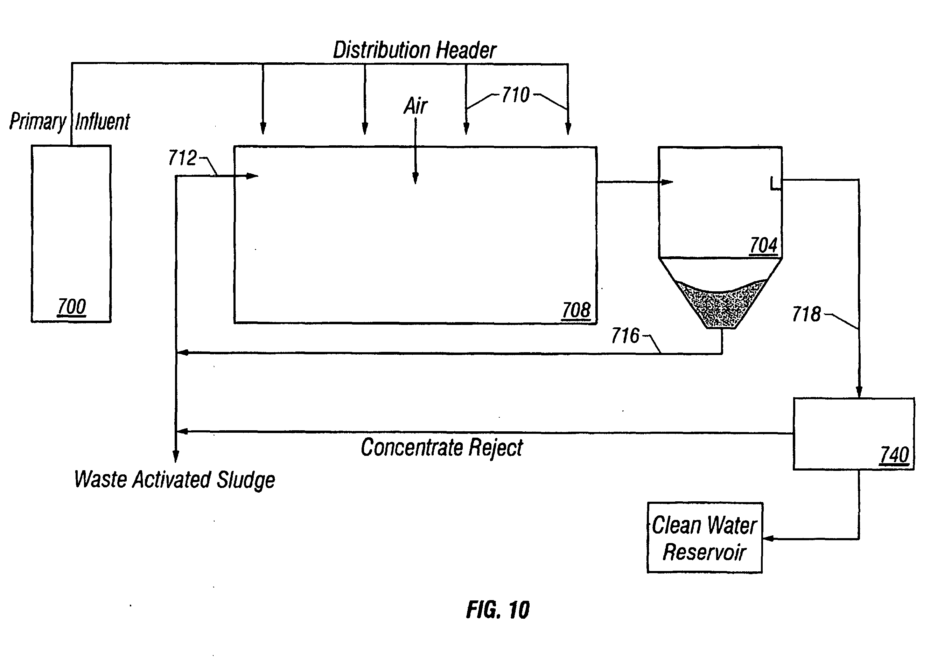

**Step Aeration -** In a step aeration system the processed PVA waste stream is introduced at several points **710** along the aeration chamber (FIG. 10). However, the return activated sludge **716,** which normally ranges from 25 to 75 percent of the design flow, is introduced at the head end of the first aeration chamber **712** as in the conventional extended aeration system. This permits a more efficient utilization of the activated sludge biomass and an even distribution of oxygen demand throughout the chamber.

Step aeration systems are designed for volumetric loadings of 40 to 60 lbs. TOC/day/1,000 cu. ft. of aeration chamber capacity at organic loadings (food to microorganisms, F/M) of 0.2 to 0.4 lbs. TOC/day/lb. MLSS. The sludge retention time (SRT) again may vary depending on nutrient addition, but in general should be similar to those of the conventional extended aeration systems (U.S. EPA, Technology Transfer, 1974).

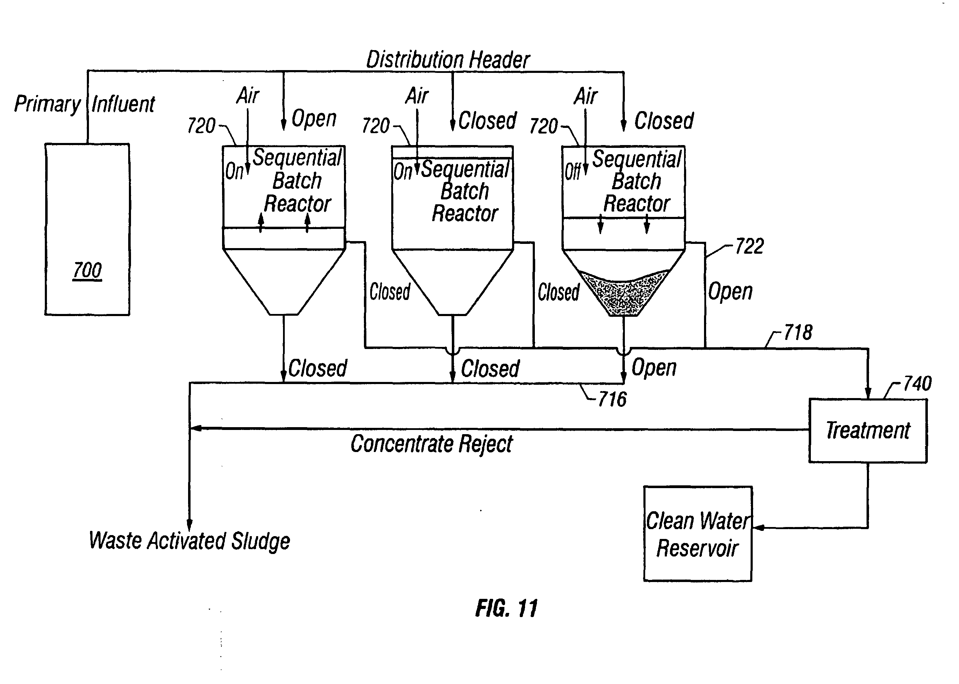

**Sequential Batch Reaction -** A sequential batch reaction system is an activated sludge process where two or more aerobic bioreactors **720** are sequentially filled, organic loading biochemically oxidized, and decant discharged from each discrete unit **722** (FIG. 11). This design eliminates the need for a separate clarifier chamber, therefore, reducing the overall footprint of the treatment plant. Typically in a sequential batch reaction system, the aerobic bioreactors will alternate between accumulation/digestion and settling/decant discharge. For the treatment of processed PVA waste streams, the sequential batch reactors may be operated in series in an effort to step down the organic carbon loading incrementally along the treatment train. In addition, treatment employing this process operation is performed in isolated batches as opposed to other designs that utilize some form of flow through system. As a result, sequential batch reaction treatment of processed PVA waste streams permit the manipulation of operating parameters, such as detention time, for each individual batch of wastewater as it is moved through the system.

In sequential batch reaction systems, the design volumetric loadings are similar to those of a conventional extended aeration system where processed PVA may be treated at a rate of 20 to 40 lbs. TOC/day/1,000 cu. ft. of aeration chamber capacity and organic loadings of 0.2 to 0.4 lbs. TOC/day/lb. MLSS.

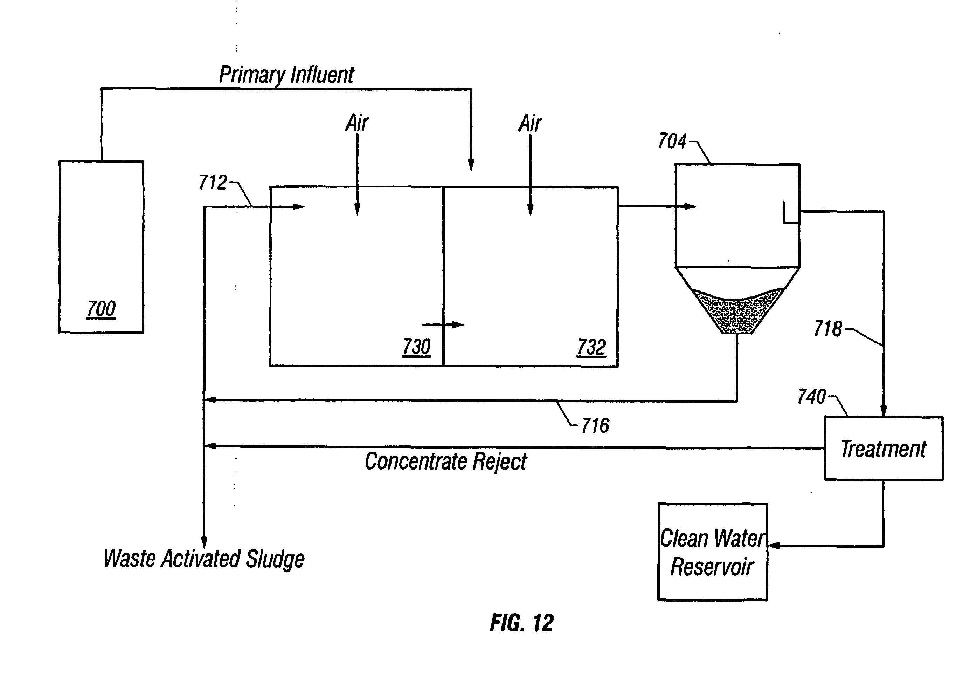

**Contact Stabilization -** As in step aeration, the difference between conventional extended aeration and contact stabilization involves a change in the feed location of influent processed PVA and sludge return **712** to the aeration chamber (FIG. 12). Volumetric TOC loadings, F/M, SRT, and organic removal efficiency are similar to those of the step aeration system. Sludge return ratios vary from 25 to 100 percent of the average design flow.

The contact stabilization system design consists of a reaction aeration chamber **730,** contact aeration chamber **732,** and a secondary clarifier **704.** In this design the processed PVA wastewater loading of colloidal or insoluble state TOC is rapidly removed from the waste stream in a relatively short contact time by the combined mechanism of biological sorption, synthesis, and flocculation. This may offer the possibility of a reduction in plant size per unit of processed PVA wastewater treated as long as the waste stream exhibits these characteristics. In the contact stabilization system design, after the biological sludge **716** is separated from the wastewater **718** in the clarifier **704,** the concentrated sludge is transferred to, and separately aerated in, the reaction aeration chamber **730.** Here the flocculated and absorbed TOC is stabilized. The contact stabilization process has the advantage of being able to handle greater shock organic and toxic loadings because of the biological buffering capacity of the reaction aeration chamber **730**, and the fact that at any given time the majority of the activated sludge **716** is isolated from the main stream of the plant wastewater flow.

**Fluidized Bed Reactors -** A fluidized bed reaction process is one where a suspended medium such as activated carbon or plastic bio balls are incorporated into the bioreactor, aeration, and or reaction/contact chambers to provide additional surface area for the purpose of growing bacterial biofilm. This modification may be adapted to any of the activated sludge processes previously described (FIG. 9-12). The advantage of fluidized bed reactors over conventional activated sludge designs is their ability to grow a wider, more diverse consortium of bacteria fixed to the suspended medium as well as those dispersed in suspended flock throughout aqueous phase of the aeration chamber. When activated carbon is utilized as the fluidizing medium, it provides adsorption properties that may buffer the affects of organic or toxic shock loads. Because of mechanical pumping and settling limitations bio balls as a fluidized bed medium are best suited in a sequential batch reaction application where all phases of treatment are performed within a single reactor.

Due to their ability to buffer high organic loads, fluidized bed reactor systems are designed for volumetric loadings of 40 to 60 lbs. TOC/day/1,000 cu. ft. of aeration chamber capacity at F/M ratios of 0.2 to 0.5 lbs. TOC/day/lb. MLSS. The SRT again may vary depending on nutrient addition, but in general should be similar to those of the conventional extended aeration systems.

**Reverse Osmosis** - Once again the goal of secondary and tertiary treatment processes within the context of this invention is to incrementally remove the organic carbon remaining in solution after the primary processing of PVA. Through the proper adaptation of secondary biological treatment it is possible to effectively remove 80 to 95 percent of that organic carbon from solution. However, in cases where processed PVA water must be maintained in a closed loop system all remaining organic carbon will have to be removed. When total removal of organic carbon is required the effluent water **718** from secondary biological treatment will be processed in a tertiary reverse osmosis system **740**.

Osmosis is a term that describes the phenomenon of water flow through a semi permeable membrane that blocks the transport of salts or other solutes through it. When a semi permeable membrane separates two water volumes, water will flow from the side of low solute concentration, to the side of high solute concentration. The flow may be stopped or reversed by applying pressure on the side of higher concentration. When this process is preformed it is referred to as reverse osmosis (Lachish, 2000). The reverse osmosis concept will be incorporated into the invention treatment train by first be pre-filtering the secondary effluent water **718** through a particulate filter (0.65 to 10 micron) to remove any suspended solids. After pre-filtering the water is transferred to a reverse osmosis (RO) concentrate tank. At this stage a high-pressure pump is utilized to pump water from the concentrate tank to the RO filter where it moves tangentially across the surface of the RO membrane. The applied pump pressure serves to force a portion of the water through the membrane to the permeate side. Salts and organic solutes to large to pass through the membrane pores are retained as concentrate and swept off the upstream side of the membrane by the tangential pressure flow (Millipore, Pellicon, and Proflux - Millipore Corp. 1999) This action prevents their buildup on the surface of the membrane and reduces potential plugging. In a typical operation 10 to 20 percent of the water filters through the RO membrane as filtrate with each pass while the remaining 80 to 90 percent is rejected and returned to the concentrate tank. With each pass or cycle the concentrate tank volume is reduced until it reaches about 10 percent of the initial batch volume.

Filtrate water free of salts, radioisotopes and TOC will be pumped to a clean water reservoir or tank for use in future PVA processing. The concentrate water will be transferred to the waste sludge holding chamber. Here it will be mixed and aerated with wasted bio-solids. As a result, additional biochemical oxidation/stabilization of TOC will take place prior to final de-watering and disposal of the solid radioactive residue and wasted dry bio-solids.

As used herein the specification, "a" or "an" may mean one or more. As used herein in the claim(s), when used in conjunction with the word "comprising", the words "a" or "an" may mean one or more than one. As used herein "another" may mean at least a second or more.

## D. OPERATION OF THE INVENTION

The following are illustrative examples of the invention and are not intended to limit the scope or operation of the invention. Other objects, features and advantages of the present invention will become apparent from the following detailed description. It should be understood, however, that the detailed description and the specific examples, while indicating preferred embodiments of the invention, are given by way of illustration only, since various changes and modifications within the spirit and scope of the invention will become apparent to those skilled in the art from this detailed description.

## EXAMPLE 1

In a preferred embodiment of the present disclosure (note Fig. 6), a solution vessel **100** is preferably an autoclave made of stainless steel or similarly corrosively resistant material. Waste solid water-soluble polymer material is placed into solution vessel **100** in an aqueous solution. Preferably solid waste water-soluble polymer material is added to water to form a solution containing polymer material in an approximate range of between about 0.5% and about, but less than, 5% by weight. In a more preferred embodiment, solid waste water-soluble polymer material is added to the solution in an approximate range of between about 0.5% and about 2.5% by weight Preferably, solution vessel **100** maintains sufficient pressure to allow heating of the aqueous solution to a temperature in excess of 212°F (100°C). More preferably, solution vessel **100** maintains sufficient pressure to allow heating of the aqueous solution to a temperature in an approximate range of between about 220°F (104.4°C) and about 250 °F (121.1°C). These parameters are normally automatically controlled and monitored. The solution is held at a designated temperature for a predetermined amount of time to allow the polymer material garments and other articles to dissolve and to assure complete sterilization of the solution.

After solubilization, the aqueous solution is then transferred to filter system **104**. Preferably, filter system **104** comprises a plurality of strainers to strain out any undissolved polymer material, which will ultimately be dissolved as a result of the abrasion and turbulence created by the recirculation of the polymer material solution. Filter system **104** also strains out any non-soluble material that is incompatible with the process.

After filtration, the aqueous solution is then transferred to heat exchanger **114** which is preferably air-cooled, to accelerate the reduction in the temperature of the solution. After recirculation to solution vessel **100**, the cooled solution is returned to ambient pressure. In a preferred embodiment, as the solution is transferred to photochemical reaction vessel **200**, the temperature of the solution is maintained within an approximate range of between about 150 °F (65.6°C) and about 200 °F (93.3°C).

When the water-soluble polymer material has been solubilized, and the aqueous solution has been filtered and cooled, it is transferred to photochemical reaction vessel **200**. An oxidative agent injection system **300** supplies hydrogen peroxide to the aqueous solution circulating within photochemical reaction vessel **200**. The hydrogen peroxide mixes with the aqueous solution in photochemical reaction vessel **200**. Preferably, oxidative agent injection system **300** comprising an automatic rotometer and pH recorder. In a preferred embodiment, concentrated hydrogen peroxide is injected at a minimum rate of approximately 100 milliliters per 10 gallons (37.9 litres) of solution.

Preferably, photochemical reactor **200** comprises an array of tubes having core elements mounted coaxially therein for the generation of electromagnetic radiation. Preferably, the elements generate ultraviolet radiation in wavelengths in an approximate range of between about 185 and about 310 nanometers. More preferably, the elements generate ultraviolet radiation in wavelengths in an approximate range of between about 185 and about 250 nanometers. In the most preferred embodiment, the aqueous solution circulates in photochemical reactor **200**, which contains a number of spaced ultraviolet elements, each having a quartz shield surrounding an ultraviolet core element. The solution is thus continuously irradiated by ultraviolet radiation while being mechanically blended, or recirculated. Exposure of the hydrogen peroxide in the solution to electromagnetic energy in the wavelengths of ultraviolet radiation results in the photolysis of the hydrogen peroxide into hydroxyl free radicals (OH·). The hydroxyl free radicals attack the organic constituents of the solution, initiating an oxidative cascade of reactions, which includes the complete destruction of the polymer material in the solution, and results in an organic acid waste stream comprising water and acetic acid. The increase in hydrogen ion concentration resulting from the oxidation reaction causes a decrease in the pH of the solution. Preferably, the pH of the solution is measured as the parameter indicator of the concentration of polymer material remaining in the solution. Measurement of the pH of the solution is preferably performed by oxidative agent injection system **300.** In this manner, oxidative agent injection system **300** can control the continuation of the photochemical process until the pH is incrementally reduced to a level that indicates all polymer material in the solution has been destroyed.

## EXAMPLE 2 Radioactive Materials

An alternative embodiment provides for the optional depletion of radioactive material in the solution. Again note Fig. 6. This is accomplished by circulation of the solution through radioactive material filtration system **600** prior to transfer of the solution to neutralization vessel **400**. Preferably, radioactive material filtration system **600** comprising a micron filter which removes radioactive particulate matter, and an ion exchange unit that reduces depleted radioisotopes at an elemental level. In a more preferred embodiment, the micron filter is composed of a <1.0 micron cartridge filter. Test results related to this embodiment appear in Chart 2-1.

## EXAMPLE 3 Neutralization of pH

Still another alternative embodiment provides for the optional neutralization of the pH of the aqueous solution. Again note Fig. 6. When the reduction in the pH of the solution indicates that substantially all of the polymer material in the solution has been destroyed, the solution is transferred to neutralization vessel **400.** A pH neutralizing system **402** injects sodium hydroxide into neutralization vessel **400** as an agent to raise the pH to a more alkaline state. Preferably, pH neutralizing system **402** comprising an automatic pH controller that proportionally injects sodium hydroxide to increase the pH until the desired pH is achieved, and controls the recirculation of the solution through neutralization vessel **400**. In a preferred embodiment, the pH is neutralized to within an approximate range of between about 6.0 and about 8.0.

## EXAMPLE 4 Biodegradation

Another alternative embodiment provides for the optional degradation of the organic acid waste remaining in the aqueous solution. After the solution reaches an acceptably neutral pH, it is transferred to bio cells **500** (See Fig. 6) where the organic compounds remaining in the aqueous solution are metabolized. Bio cells **500** are preferably fixed media aerobic bioreactors inoculated with microorganisms comprised substantially of aerobic, heterotrophic bacteria. Preferably, to maximize efficiency of the biological process, treated water is recirculated before moving to the next cell. More preferably, the recirculation mixture ratio is about 5 to about 1, such that for every gallon added to a cell, five gallons is circulated and sprayed over the fixed media to create detention time within the cell. Transfer from cell to cell and discharge may be accomplished by wet well volumetric displacement and gravity flow. The bacteria metabolize the excess carbon in the solution until the solution is suitable for discharge as defined by the regulatory requirements of the local sanitary sewer system, or other final disposal system.

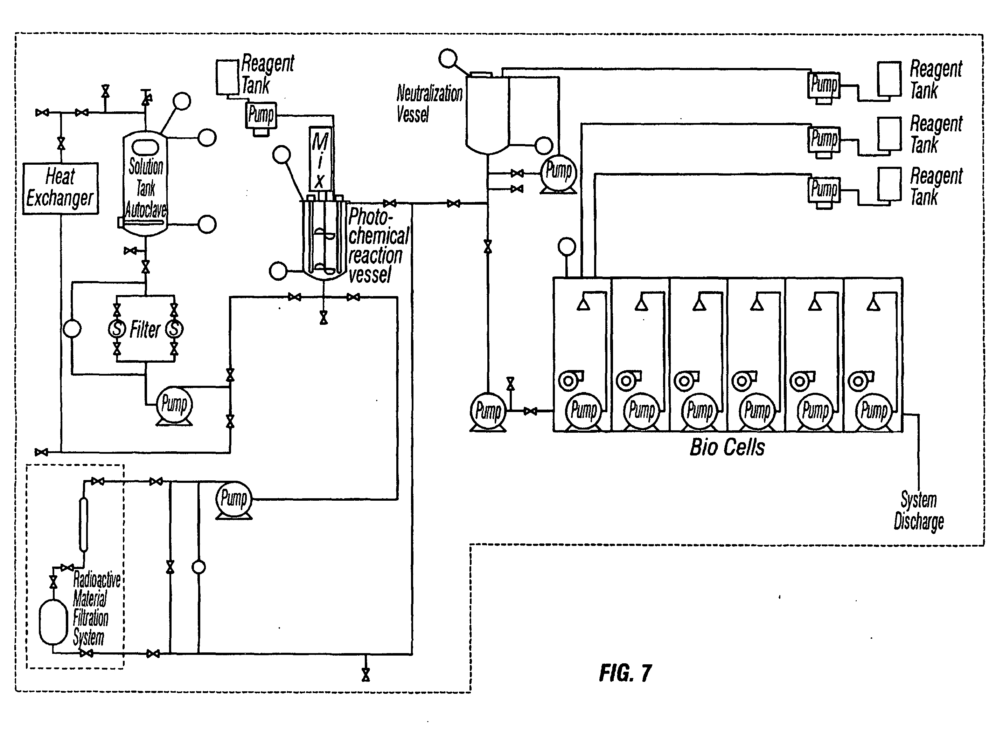

FIG. 7 is a detailed schematic of a prototype system of a preferred embodiment as disclosed herein, and in FIG. 6, and is designed to perform the process steps disclosed herein, and of FIG. 1.

**EXAMPLE 5 Various Solutions**

One may use the equipment equivalent to that of FIG. 6-7 and the process of FIG. 1, and find, as did applicants, that processing of contaminated solutions containing varying amounts of PVA in different acidic or basic solutions results in a substantial lowering of pH upon completion (about 2.8 - 5.2 hours, depending on wavelength used to irradiate solution and the concentration of $H_2O_2$ and other variables-see Examples 7-1 and 7-2) with the pH change in the approximate range of between about 2.5 and about 4.0.

**EXAMPLE 6 METHOD OF TREATING PVA: DISSOLVING PVA AND INTRODUCING HYDROXYL RADICALS IN TWO STEPS**

Treatment methods have been developed for the destruction of polyvinyl alcohol. These methods were derived based on a need for conversion and subsequent destruction of waste materials manufactured from PVA. PVA can be manufactured in various forms including film, non-woven and woven fabrics, etc. These PVA materials can be fashioned into many consumer products. The products can be used as substitute products in many industries. These consumables end up as waste materials and are costly to treat and dispose of by conventional means. PVA is a documented biodegradable polymer. However, testing indicates that the biodegradability rate is limited and not likely to be commercially viable.

Recognizing the utility in this product and the potential applications in various industrial markets, i.e., those involving hazardous waste materials, the inventors set out to develop a cost effective means to treat PVA based materials following useful life that would benefit the waste generator economically and provide a better environmental solution to bulk landfilling and even incineration processes. Testing and research led to several commercially viable technologies to treat PVA-based waste. One method for the destruction of water soluble polymers includes the steps of:

- Placing the waste stream containing the water soluble polymer in the solution tank;

- Adding water;

- Heating the tank contents to > 180°F (82.2°C);

- Holding the elevated temperature for at least 30 minutes;

- Cooling the tank contents to < 180°F (82.2°C);

- Transferring the contents to the reaction tank (assumes a polymer goes into solution in a concentration of >0% to <5%);

- Adding appropriate amount of hydrogen peroxide;

- Irradiating the solution with ultraviolet radiation for a relative period of time; and

- Evaluating the results, if desired.

For this method, the concentrated PVA solutions (>5% PVA) are hydraulically unstable and tend to come out of solution if agitated or moved. The PVA materials begin to solubilize at 180°F (82.2°C) and form true solutions when the temperature reaches 230°F (110°C). 1000-2000 mg/l hydrogen peroxide per 10000 mg/l PVA solution is required as an oxidation catalyst for efficient destruction of PVA in solution wherein efficient .destruction is defined as >90% destruction of the polymer. It has been found that UV radiation coupled with hydrogen peroxide catalyst, is the most efficient means by which to destroy PVA in solution. UV radiation at a wavelength of 180-190 nm is most efficient although wavelengths from 180 - 310 nm will produce positive results. Acetic and formic acids are the two primary photolytic products, however, a large number of organic intermediates are formed during photolysis as well.

**EXAMPLE 7 METHOD OF TREATING PVA : DISSOLVING PVA AND INTRODUCING HYDROXYL RADICALS IN A SINGLE STEP**

Another treatment method developed for the destruction of polyvinyl alcohol provides for the simultaneous dissolution of PVA and production of hydroxyl radicals, and includes the steps of:

• Placing the water soluble polymer in solution tank;

• Adding the hydrogen peroxide to the solution tank;

• Adding water;

• Heating the tank contents to > 180°F (82.2°C);

• Holding an elevated temperature for at least 30 minutes; and

• Cooling the tank contents to <180°F (82.2°C).

PVA solutions preferably from 0- 30% concentration by weight may be effectively managed by this method. The steps of adding the water soluble polymer, hydrogen peroxide and water to the solution tank may be performed in any order. 1000-2000 mg/l hydrogen peroxide per 10000 mg/l PVA concentration are required for efficient destruction, wherein efficient destruction is defined as >90% destruction of the polymer. Temperatures > 190°F (87.8°C) are required in conjunction with hydrogen peroxide to efficiently destroy the PVA. For this method, no UV irradiation is required; heating the solution containing hydrogen peroxide is sufficient to create the hydroxy radicals necessary for the destruction of the PVA. Acetic acid, formic acid, and a large number of organic intermediates are the degradation byproducts of this reaction.

**EXAMPLE 8 Treatment of PVA Solution**

While PVA is soluble in water, at concentrations greater than 1% accompanied by temperatures less than 150 °F (65.6°C), any movement or mixing of the liquid will cause PVA to re-solidify from solution. This characteristic has created significant obstacles for disposal of PVA waste streams. To overcome this physical/chemical characteristic, the following treatment process was developed to destroy PVA in solution, as demonstrated in the reaction data depicted in Chart 7-1. The principles of the present invention were affirmed by successful testing both in a lab, and through large-scale, on-site testing at a nuclear facility, with the results shown on the attached chart.

Step 1. Solution Phase A predetermined weight of contaminated PVA material is added to a specified volume of water so that a solution of specific percent concentration may be created. For the purpose of these data sets, that concentration was either 0.5% by weight in the test runs indicated below (1101-02C) - (1111-D), or 2.0% by weight in test runs (1112-D)-(1117-D). After addition of PVA and water, the solution vessel was secured and heated to a temperature of 230°F (110°C) at a pressure of 5-7 psi (34.5 - 48.3 kPa) for 30 minutes. In previous testing, it had been determined that all PVA would be driven into solution under these conditions, leaving only the radioactive contaminants and non-PVA solids.

Step 2. Cool Down Phase After heating, the solution was allowed to cool down to a temperature range of between about 130 °F (54.4°C) to about 180 °F (82.2°C). For safety, the pressure was monitored and the vessel was vented prior to transfer.

Step 3. Transfer Phase When a safe temperature and pressure was achieved, the PVA solution was pumped through 30 mesh strainers to a solution reactor. In this phase, non-PVA solids were removed from the solution. This step is necessary prior to the reaction phase to reduce the carry-over of suspended solids that would reduce transmittance of ultraviolet radiation in the reaction phase. Some care had to be taken during the transfer phase to gently mix the solution so that all the undissolved material remained in suspension. This was necessary to prevent a buildup of radioactive contaminants in the solution vessel from batch to batch. The system strainers would be cleaned between batches when the pressure differential between the strainer inlet and outlet exceeded 75% of the maximum rated output head pressure of the transfer pump.

Step 4. Reaction Phase The reaction phase involves recirculating the strained PVA solution through a photochemical reactor after first injecting it with hydrogen peroxide. The apparatus used in generating the data sets depicted in Chart 7-1 include:

• 15 gallon (56.8 litre) cone-bottom solution reactor vessel

- 2 GPM recycle pump

- 2 gallon (7.6 litre) UV reactor containing an 189 nm element with a total ultraviolet output of 19.3 watts

- Reagent metering pump with a maximum output of 2 GPD for the addition of hydrogen peroxide

- Recording pH meter to measure and record the acidification reaction

- Sample taps for the monitoring of PVA assay, temperature and solution conductivity

Once the solution reactor and UV chamber had filled to an operating level, the UV reactor was turned on to allow it to warm up. Following this, the hydrogen peroxide metering pump was started. The metering pump drew from a flask containing a predetermined volume of 30% hydrogen peroxide so that over a period of 4 hours, the PVA solution would be injected with a precise dose. After beginning the injection of hydrogen peroxide, the solution reactor recycle pump was started and PVA solution mixed with metered amounts of hydrogen peroxide would circulate from the solution reactor vessel through the UV reactor chamber and back to the solution reactor. The UV irradiation of the solution resulted in the photolysis of the hydrogen peroxide dissolved in the solution, forming hydroxyl free radicals. The hydroxyl free radicals are an extremely aggressive oxidizing agent which attack and reduce the PVA through an oxidative cascade of reactions, resulting in the complete conversion of the polyvinyl alcohol in the solution to organic acids. (Refer to the photochemical reaction process as depicted in Fig. 2). This reaction resulted in an acidification of the solution that was tracked on the recording pH meter. This was an indication that the PVA in the solution had been destroyed. At that point, a sample was drawn and an assay performed to check for PVA residual. In this assay, a vial of indicator solution was injected with a predetermined amount of sample and then after mixing, compared to a standard blank. If no color change was observed between the sample vial and the standard blank, the reaction was complete and no PVA remained in solution. The actual UV contact time during the total reaction period was calculated based on the relative volumes of each individual batch being reacted and the capacity of the UV reactor. Based on that ratio, it was determined that the average contact time for batches 1101-02C-1111-D was 2.48 hours, and the average contact time for batches 1112-D-1117-D was 3.48 hours. The difference in average contact time between the two batch sample sets was attributed to differences in the concentration of PVA in the initial solutions. Once analysis confirmed no detectable PVA remained in the solution, the batch was ready for micron filtration and ion exchange to remove both suspended and dissolved radioactive isotope contamination.

Step 5. <u>Radioisotope Filtration Phase</u> Another important phase of the large-scale test was the study of this process's ability to remove radioactive contamination from the treated PVA waste stream. In this phase, the reacted waste stream containing radioactive contaminants was pumped from the solution reactor through a series of micron filters and ion exchange resin beds, then recycled back to the solution reactor. Between each step of this process, samples were collected to determine where and to what degree the radioactive isotopes had been removed. The results of analysis are tabulated in Chart 2-1. The standard measurement units of radioactivity concentration are microcuries per cubic centimeter (uc/cc). Decontamination factor (Decon Factor) is a commonly used term that annotates filter media removal efficiency. It was determined by dividing inlet concentration by outlet concentration. For example, if inlet concentration was 100 uc/cc and outlet concentration was 10 uc/cc, then the Decon Factor would be 10. The alphanumeric symbols across the top of Chart 2-1 are standard chemistry nomenclature for the various chemical isotopes present and of interest in this case. The number represents the atomic mass number for the element. The Decon Factor is equal to the Solution Tank Activity divided by the IX Effluent Activity. The System Decon Factor is the equal to the Reaction tank Activity divided by the IX Effluent Activity. "LLD" represents an activity level below the lower limit of detection.

The far left hand column of Chart 2-1 represents the batch numbers. Batches PV06D through PV09D were filtered and run through an ion exchange unit consisting of resin with a 2:1 cation to anion ratio. Batches PV13D through PV15DR were filtered and run through an ion exchange unit consisting of resin with a 2:1 anion to cation ratio. In the second column from the left, the headings of Decon Factor and System DF represent the total decontamination of each of the radioisotopes listed separately and collectively. The isotopes most prevalent in the batches analyzed were Cobalt 58 and Cobalt 60. These two isotopes were more efficiently removed in the filter and ion exchange resin where a 2:1 anion to cation ratio was used.

The monitoring of the solution conductivity and pH was found to be an indirect but excellent means to predict the efficiency of isotope depletion. The conductivity of the wastewater returning to the solution reactor gave an indication of the extent to which heavy metal isotopes were removed, and the return water pH gave an indication of resin bed life. When the conductivity and pH of the solution reactor and recycle water equalized, the reacted and primary treated water was ready for transfer to pH correction and secondary biological treatment to remove residual dissolved organics.

Step 6. <u>pH Correction Phase</u> After completion of the radioisotope filtration phase, the reacted and primary treated wastewater was transferred from the solution reactor to the pH correction chamber. Here, a proportional automatic pH controller adjusts the pH of the incoming wastewater to fall within the limits of two predetermined set points. It was determined prior to startup of this study, that the end product of the photochemical oxidation-reduction of polyvinyl alcohol is acetic acid, and furthermore, that acetic acid is nonionic. The fact that acetic acid is nonionic allowed for the ion exchange and removal of radioactive isotopes in the filtration phase without loading the resin with dissolved organics. To correct pH, the controller injected sodium hydroxide into the solution containing acetate of the acetic acid. This resulted in the formation of a sodium acetate solution, which was then ready for introduction to secondary biological treatment.

Step 7. <u>Biological Treatment Phase</u> Once neutralized, the solution still contained a significant organic load. The solution was metered through a series of aerobic fixed media bioreactor cells. Each cell consisted of a vertical tower with internal recirculation across fixed media colonized with microorganisms, which in turn biochemically degraded the residual sodium acetate dissolved in the solution. (Refer to Fig. 4 for detail of the biochemical pathways of degradation). The feed rate of acetate solution to the bioreactor cells was based on the relationship of the following dynamics:

- Concentration of sodium acetate in solution

- Surface area of fixed media available for microbial colonization

- Concentration of dissolved oxygen in solution

- Concentration of macro-nutrients in solution

- The detention time within the bio-cell reactors

- Discharge limitations for total organic carbon concentration

A removal rate of 80 to 90% of the total pounds of TOC would be considered normal for a system where the listed dynamics are monitored and balanced. If the influent TOC loading is too high or the effluent discharge limitation is exceptionally tight, the addition of enhanced biological treatment may be necessary. Fluidized bed bioreactor treatment utilizing pulverized activated carbon (PAC) is an enhanced biological treatment well suited to this application. A PAC chamber is one in which dried pulverized activated carbon is charged to an aeration chamber to form a fluidized bed bioreactor. The pulverized carbon becomes a suspended substrate for bacterial growth and attachment, thus removing the bacteria from the growth medium. Observation of a 25-30% mixed liquor suspended solids represents the optimum concentration to provide maximum surface area for bacterial growth. When used in combination with other forms of secondary treatment, such as, but not limited to, fixed media bioreactors, total combined TOC removal may improve to 95-99%.

## CHART 2-1
### Radioactivity Concentrations (uc/cc)

| Run | | Cs-134 | Cs-137 | Co-58 | Co-60 | Mn-54 | Ag-110 | Sb-125 | Nb-95 | Zr-95 | Total Activity (uc/cc) | No. of Passes |
|---|---|---|---|---|---|---|---|---|---|---|---|---|
| PV06D | Solution Tank | 4.12E-07 | 4.27E-06 | 4.34E-06 | 6.67E-06 | <LLD | 6.43E-07 | 9.82E-07 | <LLD | <LLD | 1.82E-05 | |
| | IX Effluent | <LLD | <LLD | 6.22E-07 | 1.24E-06 | <LLD | <LLD | <LLD | <LLD | <LLD | 1.86E-06 | 1.0 |
| | Decon Factor | | | 7.0 | 5.4 | | | | | | 9.8 | |
| PV07D | Solution Tank | 3.08E-07 | 2.34E-06 | 2.40E-06 | 2.43E-06 | <LLD | <LLD | 6.98E-07 | <LLD | <LLD | 8.16E-06 | |
| | IX Effluent | <LLD | 1.31E-07 | 7.49E-07 | 1.64E-06 | <LLD | <LLD | <LLD | <LLD | <LLD | 2.52E-06 | 1.0 |
| | Decon Factor | | 17.9 | 3.2 | 1.5 | | | | | | 3.2 | |
| PV08D | Solution Tank | <LLD | 7.60E-07 | 8.17E-06 | 6.60E-06 | 3.92E-07 | <LLD | <LLD | <LLD | <LLD | 1.68E-05 | |
| | IX Effluent | <LLD | <LLD | 1.51E-06 | 1.94E-06 | <LLD | <LLD | <LLD | <LLD | <LLD | 3.45E-06 | 2.0 |
| | Decon Factor | | | 5.4 | 3.4 | | | | | | 4.9 | |
| PV09D | Solution Tank | <LLD | <LLD | 5.07E-06 | 2.72E-06 | 5.14E-07 | <LLD | <LLD | 2.32E-06 | 1.57E-06 | 1.22E-05 | |
| | IX Effluent | <LLD | <LLD | 2.24E-06 | 1.45E-06 | 1.50E-07 | <LLD | <LLD | 8.85E-07 | 6.38E-07 | 7.41E-06 | 4.0 |
| | Decon Factor | | | 2.3 | 1.9 | 3.4 | | | 2.6 | 2.5 | 1.6 | |

22

## CHART 2-1 (CONTINUED)

| Sample | Measurement | | | | | | | | | | |
|---|---|---|---|---|---|---|---|---|---|---|---|
| PV13D | Reaction Tk | <LLD | 9.89E-04 | 5.18E-04 | 5.27E-05 | <LLD | 1.44E-05 | 1.27E-04 | 7.31E-05 | 1.85E-03 | |
| | IX Influent | <LLD | 1.30E-04 | 6.06E-05 | 6.76E-06 | <LLD | 3.58E-06 | 1.39E-05 | 8.96E-06 | 2.30E-04 | 1.0 |
| | IX Effluent | <LLD | 5.68E-07 | 2.64E-07 | <LLD | <LLD | <LLD | <LLD | <LLD | 8.32E-07 | 3.0 |
| | Filter DF | <LLD | 7.6 | 8.5 | 7.8 | <LLD | 4.0 | 9.1 | 8.2 | 8.0 | |
| | IX DF | <LLD | 228.9 | 229.5 | <LLD | <LLD | <LLD | <LLD | <LLD | 276.4 | |
| | System DF | <LLD | 1741.2 | 1962.1 | <LLD | <LLD | <LLD | <LLD | <LLD | 2223.6 | |
| PV15D | Reaction Tk | <LLD | 1.44E-03 | 6.68E-04 | 1.03E-04 | <LLD | 2.19E-05 | 3.09E-04 | 1.83E-04 | 2.92E-03 | 1.0 |
| | IX Influent | <LLD | 4.46E-05 | 1.71E-05 | 2.95E-06 | <LLD | <LLD | 7.82E-06 | 5.09E-06 | 7.86E-05 | 3.0 |
| | IX Effluent | <LLD | 1.36E-06 | 5.87E-07 | <LLD | <LLD | <LLD | 2.85E-07 | 1.72E-07 | 2.41E-06 | |
| | Filter DF | <LLD | 32.3 | 39.1 | 34.9 | | | 39.5 | 36.0 | 37.2 | |
| | IX DF | <LLD | 32.8 | 29.1 | | | | 27.4 | 29.6 | 32.6 | |
| | System DF | | 1058.8 | 1138.0 | | | | 1084.2 | 1064.0 | 1211.6 | |
| PV16D | Reaction Tk | <LLD | 9.69E-04 | 5.69E-04 | 6.91E-05 | <LLD | 1.99E-05 | 2.00E-04 | 1.21E-04 | 2.06E-03 | 1.0 |
| | IX Influent | <LLD | 4.88E-06 | 2.13E-06 | 3.00E-07 | <LLD | <LLD | 1.01E-06 | 5.25E-07 | 8.84E-06 | 3.0 |
| | IX Effluent | <LLD | 4.55E-07 | 2.64E-07 | <LLD | <LLD | <LLD | 1.42E-07 | <LLD | 8.61E-07 | |
| | Filter DF | <LLD | 198.6 | 267.1 | 230.3 | | | 198.0 | 230.5 | 233.0 | |

EP 1 237 820 B1

## CHART 2-1 (CONTINUED)

|  |  |  |  |  |  |  |  |  |  |  |  |  |
|---|---|---|---|---|---|---|---|---|---|---|---|---|
|  | IX DF |  |  | 10.7 | 8.1 |  |  |  | 7.1 |  | 10.3 |  |
|  | System DF |  |  | 2129.7 | 2155.3 |  |  |  | 1408.5 |  | 2392.6 |  |
| PV15DR | Reaction Tk | <LLD | <LLD | 1.36E-03 | 7.46E-04 | 8.78E-05 | <LLD | 3.03E-05 | 2.21E-04 | 1.35E-04 | 2.70E-03 |  |
|  | IX Influent | <LLD | <LLD | 2.21E-07 | 1.41E-07 | <LLD | <LLD | <LLD | <LLD | <LLD | 3.61E-07 | 1.0 |
|  | IX Effluent | <LLD | <LLD | 2.23E-07 | <LLD | <LLD | <LLD | <LLD | <LLD | <LLD | 2.23E-07 | 3.0 |
|  | Filter DF |  |  | 6153.8 | 5290.8 |  |  |  |  |  | 7479.2 |  |
|  | IX DF |  |  | 1.0 |  |  |  |  |  |  | 1.6 |  |
|  | System DF |  |  | 6098.7 |  |  |  |  |  |  | 12107.6 |  |
| Discharge Spec. |  | <2E-06 | <2E-06 | <2E-05 | <3E-06 | <3E-05 | <6E-06 | <3E-05 | <3E-05 | <2E-05 |  |  |

## CHART 6-1

### Palo Verde Test

| | | | | | | | | | | |
|---|---|---|---|---|---|---|---|---|---|---|
| 1101- | 37.85 | 0.50 | 0.12 | 7.57 | 4.27 | 3.30 | 4.20 | 21.00 | 189 | 19.3 |
| 1102- | 37.85 | 0.50 | 0.12 | 7.08 | 4.06 | 3.02 | 3.77 | 18.85 | 189 | 19.3 |
| 1103- | 37.85 | 0.50 | 0.12 | 7.50 | 4.74 | 2.76 | 4.49 | 22.45 | 189 | 19.3 |
| 1104- | 37.85 | 0.50 | 0.12 | 8.34 | 4.61 | 3.73 | 0.88 | 4.40 | 189 | 19.3 |
| 1105- | 37.85 | 0.50 | 0.12 | 8.46 | 4.96 | 3.50 | 1.48 | 7.40 | 189 | 19.3 |
| 1106-D | 37.85 | 0.50 | 0.12 | 7.95 | 4.64 | 3.31 | 1.40 | 7.00 | 189 | 19.3 |
| 1107-D | 37.85 | 0.50 | 0.12 | 8.22 | 4.85 | 3.37 | 1.78 | 8.90 | 189 | 19.3 |
| 1108-D | 37.85 | 0.50 | 0.12 | 8.86 | 4.94 | 3.92 | 4.29 | 21.45 | 189 | 19.3 |
| 1109-D | 37.85 | 0.50 | 0.12 | 9.63 | 5.97 | 3.66 | 1.76 | 8.80 | 189 | 19.3 |
| 1110-D | 37.85 | 0.50 | 0.12 | 8.68 | 4.96 | 3.72 | 1.78 | 8.90 | 189 | 19.3 |
| 1111-D | 37.85 | 0.50 | 0.12 | 9.01 | 5.97 | 3.04 | 1.44 | 7.20 | 189 | 19.3 |
| 1112-D | 37.85 | 2.0 | 0.12 | 7.37 | 4.30 | 3.07 | 2.45 | 12.25 | 189 | 19.3 |
| 1113-D | 37.85 | 2.0 | 0.12 | 7.57 | 4.88 | 2.69 | 4.33 | 21.65 | 189 | 19.3 |
| 1114-D | 37.85 | 2.0 | 0.12 | 7.02 | 3.84 | 3.18 | 4.35 | 21.75 | 189 | 19.3 |
| 1115-D | 37.85 | 2.0 | 0.12 | 7.01 | 3.94 | 3.07 | 3.10 | 15.50 | 189 | 19.3 |
| 1116-D | 37.85 | 2.0 | 0.12 | 6.82 | 3.10 | 3.72 | 3.65 | 18.25 | 189 | 19.3 |
| 1117-D | 37.85 | 2.0 | 0.12 | 7.20 | 4.41 | 2.79 | 3.00 | 15.00 | 189 | 19.3 |
| Average | 37.85 | 1.03 | 0.12 | 7.90 | 4.61 | 3.29 | 2.83 | 14.16 | 189 | 19.3 |
| | | | | 0.83 | 0.71 | 0.38 | 1.28 | 6.38 | | |
| Maximu | | | | 9.63 | 5.97 | 3.92 | 4.49 | 22.45 | | |
| Minimu | | | | 6.82 | 3.10 | 2.69 | 0.88 | 4.40 | | |
| Correlation | | | | | 0.89 | | | | | |

## CHART 6-2

### Pilot Point Test

| | | | | | | | | | | |
|---|---|---|---|---|---|---|---|---|---|---|
| 1001C | 15.14 | 0.50 | 0.30 | 6.40 | 4.19 | 2.21 | 5.00 | 20.00 | 250 | 6.5 |
| 1002C | 15.14 | 0.50 | 0.30 | 6.80 | 4.14 | 2.66 | 5.25 | 21.00 | 250 | 6.5 |
| 1003C | 15.14 | 0.50 | 0.30 | 6.70 | 3.90 | 2.80 | 5.25 | 21.00 | 250 | 6.5 |
| 1104C | 15.14 | 0.50 | 0.30 | 6.12 | 4.23 | 1.89 | 5.25 | 21.00 | 250 | 6.5 |
| 1105C | 15.14 | 0.50 | 0.30 | 6.80 | 4.02 | 2.78 | 4.50 | 18.00 | 250 | 6.5 |
| 1106C | 15.14 | 0.50 | 0.30 | 6.80 | 4.10 | 2.70 | 5.50 | 22.00 | 250 | 6.5 |
| 1107C | 15.14 | 0.50 | 0.30 | 6.70 | 4.60 | 2.10 | 5.50 | 22.00 | 250 | 6.5 |
| 1108C | 15.14 | 0.50 | 0.30 | 6.70 | 3.90 | 2.80 | 4.75 | 19.00 | 250 | 6.5 |
| 1109C | 15.14 | 0.50 | 0.30 | 6.20 | 3.80 | 2.40 | 5.25 | 21.00 | 250 | 6.5 |
| 1110C¹ | 15.14 | 0.50 | 0.15 | 7.33 | 5.62 | 1.71 | 5.00 | 20.00 | 250 | 6.5 |
| 1111C | 15.14 | 0.50 | 0.30 | 8.50 | 5.77 | 2.73 | 5.25 | 21.00 | 250 | 6.5 |
| 1112C | 15.14 | 0.50 | 0.30 | 8.25 | 4.44 | 3.81 | 5.50 | 22.00 | 250 | 6.5 |
| 1113C | 15.14 | 0.50 | 0.30 | 6.50 | 4.65 | 1.85 | 5.25 | 21.00 | 250 | 6.5 |
| Average | 15.14 | 0.50 | 0.29 | 6.91 | 4.41 | 2.50 | 5.17 | 20.69 | | |
| | | | | 0.72 | 0.63 | 0.56 | 0.30 | 1.18 | | |
| Maximu | | | | 8.50 | 5.77 | 3.81 | 5.50 | 22.00 | | |
| Minimu | | | | 6.12 | 3.80 | 1.71 | 4.50 | 18.00 | | |
| Correlation | | | | | 0.66 | | | | | |
| 991029C | 15.14 | 0.50 | 0.00 | 7.54 | 7.08 | 0.46 | 4.00 | 16.00 | | |

1   Batch 991028C run with 1cc 30% H2O2 / 202cc water

2   Comments: Negative control, Batch 991029C run with UV only, no peroxide added. After 4.0 (Rad Hours) no reduction in PVA concentration was observed, as determined by color assay.

While this invention has been described in connection with preferred embodiments, it is not intended to limit the scope of the invention to the particular form set forth, but on the contrary, it is intended to cover such alternatives, modifications, and equivalents as may be included within the scope of the invention as defined by the appended claims. For example, there are numerous variations and combinations of pumps, plumbing lines, plumbing connections, and value arrangements that can be made to establish the necessary connections between the essential components of the described system. Also, one skilled in the art will appreciate that in practicing the process of this invention, reasonable experimentation will be required to optimize process conditions as a function of the PVA in solution to be treated and the equipment selected or available to perform the invention.

**REFERENCES**

The following references, to the extent that they provide exemplary procedural or other details supplementary to those set forth herein, are specifically incorporated herein by reference.

Burgess, Quarmby & Stephenson, "Vitamin addition: an option for sustainable activated sludge process effluent quality," *Journal of Industrial Microbiology & Biotechnology,* 24: 267-274 (2000).

Bolton *et al.,* "Homogeneous Photodegradation of Contaminated Water on Introduction" review paper, CRC Press, Boca Raton, FL (1993).

Finley, Amended Assay, "Spectrophotometric Determination of Polyvinyl Alcohol in Paper Coatings," *Analytical Chemistry,* 33(13) (December 1961).

Uri Lachish, "Osmosis and Reverse Osmosis and Osmotic Pressure: What They Are," Guma Science, urila@internet-zahav.net (2000).

Oji, "Oxidative Mineralization and Characterization of Polyvinyl Alcohol for Compatibility With Tank Farm Processing Chemistry," Extended Abstract of Report No. RP-99-00524, Rev. 0, a memorandum, and a subsequent complete Report of the same title dated June 30, 1999.

Millipore, Pellicon, and Proflux - Millipore Corp, "Protein Concentration and Diafiltration by Tangential Flow Filtration," pages 1-25 (1999).

U.S. Environmental Protection Agency, Technology Transfer, "Process Design Manual For Upgrading Existing Wastewater Treatment Plants," Chapters 4-5 (1974).

U.S. Patent 5,208,104

U.S. Patent 5,181,967

U.S. Patent 5,650,219

**Claims**

1. A process for treating an aqueous solution containing (i) a water-soluble polymer and (ii) radioactive material, said process comprising:

   heating the aqueous solution to a temperature of at least 82.2°C (180°F);
   introducing at least one oxidizing agent into the aqueous solution; and
   maintaining the aqueous solution at a reaction temperature of at least 82.2°C (180°F) for a period of time sufficient to react, degrade or break down at least a portion of the polymer to produce at least one degradation product.

2. The process of claim 1, wherein the aqueous solution is heated to a reaction temperature ranging from 82.2°C (180°F) to 121.1°C (250°F).

3. The process of claim 1, wherein the aqueous solution is heated to a reaction temperature ranging from 104.4°C (220°F) to 121.1°C (250°F).

4. The process of claim 1, wherein the aqueous solution is heated in a pressurized system to a temperature ranging from 100°C (212°F) to 121.1°C (250°F).

5. The process of claim 1, wherein the at least one oxidizing agent comprises hydrogen peroxide.

6. The process of claim 5, wherein the hydrogen peroxide is present in the aqueous solution in an amount ranging from 0.05% to 20% by volume.

**7.** The process of claim 6, wherein the hydrogen peroxide is present in the aqueous solution in an amount ranging from 0.05% to 0.5% by volume.

**8.** The process of claim 1, wherein the at least one degradation product comprises at least one organic acid.

**9.** The process of claim 1, further comprising the step of:

placing (i) the water-soluble polymer and (ii) the radioactive material into a pressurizable vessel.

**10.** The process of claim 9, further comprising the step of:

introducing water into the pressurizable vessel to form the aqueous solution.

**11.** The process of claim 10, further comprising the step of:

injecting hydrogen peroxide into the pressurizable vessel prior to or during the heating step.

**12.** The process of claim 1, further comprising the step of:

recirculating the aqueous solution prior to or during the heating step.

**13.** The process of claim 12, further comprising the step of:

straining the aqueous solution during the recirculating step.

**14.** The process of claim 1, further comprising the step of:

circulating the aqueous solution through a heat exchanger to cool the aqueous solution to a second temperature.

**15.** The process of claim 9, further comprising the step of:

discharging the aqueous solution from the pressurizable vessel.

**16.** The process of any one of claims 1 to 15, further comprising the step of:

filtering the aqueous solution to remove at least a portion of the radioactive material from the aqueous solution.

**17.** The process of claim 16, wherein filtration is accomplished by a particulate filter having a nominal pore size of 10 microns to 100 microns.

**18.** The process of claim 17, further comprising the step of:

circulating the aqueous solution through a second particulate filter having a nominal pore size of from 0.1 microns to 1.0 microns.

**19.** The process of claim 16, further comprising the step of:

removing at least a portion of the radioactive material from the aqueous solution by passing the aqueous solution through an ion exchange unit.

**20.** The process of claim 16, further comprising the step of:

removing at least a portion of the radioactive material from the aqueous solution by passing the aqueous solution through a reverse osmosis unit.

**21.** The process of claim 1, further comprising the step of:

measuring the concentration of the water-soluble polymer in the aqueous solution.

22. The process of claim 1, further comprising the step of:

neutralizing the pH of the aqueous solution.

23. The process of claim 22, wherein the step of neutralizing the pH comprises introducing sodium hydroxide into the aqueous solution.

24. The process of claim 22, wherein the neutralizing step comprises the addition of an effective amount of at least one base reagent to provide an aqueous solution having a pH in the range of 6.0 to 10.0.

25. The process of claim 1, further comprising the step of:

measuring a decrease in the pH of the aqueous solution.

26. The process of claim 25, wherein a decrease in pH of the aqueous solution below at least 6.0 indicates complete degradation of the water-soluble polymer.

27. The process of claim 1, wherein confirmation of substantial completion of oxidation of the water-soluble polymer is made by colorimetric assay.

28. The process of claim 1, further comprising the step of:

biodegrading at least a portion of the at least one degradation product.

29. The process of claim 1, wherein the at least one degradation product comprises at least one organic acid, and the process further comprises the step of:

at least partially depleting the at least one organic acid by introducing aerobic, heterotrophic bacteria into the aqueous solution.

30. The process of claim 1, further comprising the step of:

introducing the aqueous solution into a fluidized bed of activated carbon.

31. The process of claim 1, wherein the polymer comes from one or more articles manufactured from fibers, non-woven fabrics, woven fabrics, plastic films, molded articles, or a combination thereof.

32. The process of claim 31, wherein the one or more articles comprise a garment, protective clothing, apparel, a linen, a drape, a towel, a sponge, a plastic bag, a rag, a gauze, a wipe, a utensil, a mop, or a combination thereof.

33. The process of claim 1, wherein the (i) water-soluble polymer and (ii) radioactive material collectively form radioactive-contaminated waste, and the process reduces the volume of radioactive-contaminated waste by a factor of greater than 1000.

34. The process of claim 1, wherein the aqueous solution is maintained at a reaction temperature of at least 82.2°C (180°F) for a period of at least 30 minutes.

35. The process of claim 1, further comprising the step of:

filtering the aqueous solution to remove non-solubilized material from the aqueous solution.

36. The process of any one of claims 1 to 35, wherein the water-soluble polymer comprises polyvinyl alcohol, sodium polyacrylate, poly maleic acid, ammonium polyacrylate, or a combination thereof.

37. The process of any one of claims 1 to 35, wherein the water-soluble polymer is polyvinyl alcohol.

**38.** The process of claim 37, wherein the aqueous solution comprises from 0.5 to 30% by volume of polyvinyl alcohol.

**Patentansprüche**

**1.** Verfahren zur Behandlung einer wässrigen Lösung, enthaltend (i) ein wasserlösliches Polymer und (ii) radioaktives Material, wobei das Verfahren umfasst:

Erwärmen der wässrigen Lösung auf eine Temperatur von wenigstens 82,2 °C (180 °F),
Einbringen wenigstens eines Oxidationsmittels in die wässrige Lösung, und
Halten der wässrigen Lösung bei einer Reaktionstemperatur von wenigstens 82,2 °C (180 °F) für eine ausreichende Zeitdauer, um eine Reaktion, einen Abbau oder eine Aufspaltung wenigstens eines Teils des Polymers zu ermöglichen, damit wenigstens ein Abbauprodukt erzeugt wird.

**2.** Verfahren nach Anspruch 1, wobei die wässrige Lösung auf eine Reaktionstemperatur in einem Bereich von 82,2 °C (180°F) bis 121,1 °C (250 °F) erwärmt wird.

**3.** Verfahren nach Anspruch 1, wobei die wässrige Lösung auf eine Reaktionstemperatur in einem Bereich von 104,4 °C (220 °F) bis 121,1 °C (250 °F) erwärmt wird.

**4.** Verfahren nach Anspruch 1, wobei die wässrige Lösung in einem Drucksystem auf eine Temperatur in einem Bereich von 100 °C (212 °F) bis 121,1 °C (250 °F) erwärmt wird.

**5.** Verfahren nach Anspruch 1, wobei das wenigstens eine Oxidationsmittel Wasserstoffperoxid umfasst.

**6.** Verfahren nach Anspruch 5, wobei das Wasserstoffperoxid in der wässrigen Lösung in einer Menge in einem Bereich von 0,05 Vol.-% bis 20 Vol.-% vorliegt.

**7.** Verfahren nach Anspruch 6, wobei das Wasserstoffperoxid in der wässrigen Lösung in einer Menge in einem Bereich von 0,05 Vol.-% bis 0,5 Vol.-% vorliegt.

**8.** Verfahren nach Anspruch 1, wobei das wenigstens eine Abbauprodukt wenigstens eine organische Säure umfasst.

**9.** Verfahren nach Anspruch 1, ferner umfassend den Schritt des Einbringens (i) des wasserlöslichen Polymers und (ii) des radioaktiven Materials in ein Druckgefäß.

**10.** Verfahren nach Anspruch 9, ferner umfassend den Schritt des Einbringens von Wasser in das Druckgefäß, um die wässrige Lösung zu erzeugen.

**11.** Verfahren nach Anspruch 10, ferner umfassend den Schritt des Einspritzens von Wasserstoffperoxid vor oder während des Erwärmungsschrittes in das Druckgefäß.

**12.** Verfahren nach Anspruch 1, ferner umfassend den Schritt des Rezirkulierens der wässrigen Lösung vor oder während des Erwärmungsschrittes.

**13.** Verfahren nach Anspruch 12, ferner umfassend den Schritt des Filtrierens der wässrigen Lösung während des Rezirkulationsschrittes.

**14.** Verfahren nach Anspruch 1, ferner umfassend den Schritt des Zirkulierens der wässrigen Lösung durch einen Wärmetauscher, um die wässrige Lösung auf eine zweite Temperatur zu kühlen.

**15.** Verfahren nach Anspruch 9, ferner umfassend den Schritt des Entnehmens der wässrigen Lösung aus dem Druckgefäß.

**16.** Verfahren nach einem der Ansprüche 1 bis 15, ferner umfassend den Schritt des Filtrierens der wässrigen Lösung, um wenigstens einen Teil des radioaktiven Materials aus der wässrigen Lösung zu entfernen.

**17.** Verfahren nach Anspruch 16, wobei das Filtrieren durch einen Feinstfilter mit einer Porennennweite von 10 Mikrometer bis 100 Mikrometer erfolgt.

18. Verfahren nach Anspruch 17, ferner umfassend den Schritt des Zirkulierens der wässrigen Lösung durch einen zweiten Feinstfilter mit einer Porennennweite von 0,1 Mikrometer bis 1,0 Mikrometer.

19. Verfahren nach Anspruch 16, ferner umfassend den Schritt des Entfernens von wenigstens einem Teil des radioaktiven Materials aus der wässrigen Lösung durch Durchleiten der wässrigen Lösung durch eine Ionenaustauschereinheit.

20. Verfahren nach Anspruch 16, ferner umfassend den Schritt des Entfernens von wenigstens einem Teil des radioaktiven Materials aus der wässrigen Lösung durch Durchleiten der wässrigen Lösung durch eine Ultrafiltrationseinheit.

21. Verfahren nach Anspruch 1, ferner umfassend den Schritt des Bestimmens der Konzentration des wasserlöslichen Polymers in der wässrigen Lösung.

22. Verfahren nach Anspruch 1, ferner umfassend den Schritt des Neutralisierens des pH-Wertes der wässrigen Lösung.

23. Verfahren nach Anspruch 22, wobei der Schritt des Neutralisierens des pH-Wertes das Einbringen von Natriumhydroxid in die wässrige Lösung umfasst.

24. Verfahren nach Anspruch 22, wobei der Neutralisationsschritt die Zugabe einer wirksamen Menge von wenigstens einem basischen Reagenz umfasst, um eine wässrige Lösung mit einem pH-Wert in einem Bereich von 6,0 bis 10,0 zu erzeugen.

25. Verfahren nach Anspruch 1, ferner umfassend den Schritt des Messens einer Abnahme des pH-Wertes in der wässrigen Lösung.

26. Verfahren nach Anspruch 25, wobei eine Abnahme des pH-Wertes der wässrigen Lösung auf einen Wert kleiner als wenigstens 6 den vollständigen Abbau des wasserlöslichen Polymers anzeigt.

27. Verfahren nach Anspruch 1, wobei eine Bestätigung des wesentlichen Abschlusses der Oxidation des wasserlöslichen Polymers mithilfe eines kolorimetrischen Assays erfolgt.

28. Verfahren nach Anspruch 1, ferner umfassend den Schritt des biologischen Abbauens von wenigstens einem Teil des wenigstens einen Abbauproduktes.

29. Verfahren nach Anspruch 1, wobei das wenigstens eine Abbauprodukt wenigstens eine organische Säure umfasst und das Verfahren ferner den Schritt des wenigstens teilweisen Abreicherns der wenigstens einen organischen Säure durch Einbringen von aeroben, heterotrophen Bakterien in die wässrige Lösung umfasst.

30. Verfahren nach Anspruch 1, ferner umfassend den Schritt des Einbringens der wässrigen Lösung in ein Fließbett aus Aktivkohle.

31. Verfahren nach Anspruch 1, wobei das Polymer aus einem oder mehreren Gegenständen hergestellt aus Fasern, Vliesstoffen, Webstoffen, Kunststofffolien, Formkörpem oder einer Kombination daraus herrührt.

32. Verfahren nach Anspruch 31, wobei der eine oder die mehreren Gegenstände ein Kleidungsstück, ein Schutzkleidungsstück, ein Gewand, Bettwäsche, Web- und Wirkwaren, ein Handtuch, ein Schwamm, eine Plastiktüte, ein Lappen, Gaze, ein Wischtuch, ein Gebrauchsgegenstand, ein Mopp oder eine Kombination daraus sind.

33. Verfahren nach Anspruch 1, wobei (i) das wasserlösliche Polymer und (ii) des radioaktiven Materials zusammen radioaktiv-kontaminierten Müll bilden und das Verfahren das Volumen des radioaktiv-kontaminierten Mülls um einen Faktor von mehr als 1000 verringert.

34. Verfahren nach Anspruch 1, wobei die wässrige Lösung bei einer Reaktionstemperatur von wenigstens 82,2 °C (180 °F) für eine Zeitdauer von wenigstens 30 Minuten gehalten wird.

**35.** Verfahren nach Anspruch 1, ferner umfassend den Schritt des Filtrierens der wässrigen Lösung, um nicht aufgelöste Stoffe aus der wässrigen Lösung zu entfernen.

**36.** Verfahren nach einem der Ansprüche 1 bis 35, wobei das wasserlösliche Polymer Polyvinylalkohol, Natriumpolyacrylat, Polymaleinsäure, Ammoniumpolyacrylat oder eine Kombination daraus umfasst.

**37.** Verfahren nach einem der Ansprüche 1 bis 35, wobei das wasserlösliche Polymer Polyvinylalkohol ist.

**38.** Verfahren nach Anspruch 37, wobei die wässrige Lösung 0,5 Vol.-% bis 30 Vol.-% Polyvinylalkohol umfasst.


**Revendications**

**1.** Procédé de traitement d'une solution aqueuse contenant un polymère hydrosoluble (a) et un matériau radioactif (b), lequel procédé comporte :

- le fait de chauffer la solution aqueuse à une température d'au moins 82,2 °C (180 °F) ;
- le fait d'introduire au moins un agent oxydant dans cette solution aqueuse ;
- et le fait de maintenir la solution aqueuse à une température de réaction d'au moins 82,2 °C (180 °F) pendant un laps de temps suffisant pour qu'au moins une partie du polymère réagisse, se dégrade ou se décompose en donnant au moins un produit de dégradation.

**2.** Procédé conforme à la revendication 1, dans lequel on chauffe la solution aqueuse à une température de réaction de 82,2 à 121,1 °C (de 180 à 250 °F).

**3.** Procédé conforme à la revendication 1, dans lequel on chauffe la solution aqueuse à une température de réaction de 104,4 à 121,1 °C (de 220 à 250 °F).

**4.** Procédé conforme à la revendication 1, dans lequel on chauffe la solution aqueuse, dans un système sous pression, à une température de 100 à 121,1 °C (de 212 à 250 °F).

**5.** Procédé conforme à la revendication 1, dans lequel l'agent oxydant au nombre d'au moins un comprend du peroxyde d'hydrogène.

**6.** Procédé conforme à la revendication 5, dans lequel le peroxyde d'hydrogène se trouve présent dans la solution aqueuse en une proportion de 0,05 à 20 % en volume.

**7.** Procédé conforme à la revendication 6, dans lequel le peroxyde d'hydrogène se trouve présent dans la solution aqueuse en une proportion de 0,05 à 0,5 % en volume.

**8.** Procédé conforme à la revendication 1, dans lequel le produit de dégradation au nombre d'au moins un comprend au moins un acide organique.

**9.** Procédé conforme à la revendication 1, qui comporte en outre une étape consistant :

- à placer le polymère hydrosoluble (a) et le matériau radioactif (b) dans un récipient pressurisable.

**10.** Procédé conforme à la revendication 9, qui comporte en outre une étape consistant :

- à introduire de l'eau dans le récipient pressurisable, pour former la solution aqueuse.

**11.** Procédé conforme à la revendication 10, qui comporte en outre une étape consistant :

- à injecter du peroxyde d'hydrogène dans le récipient pressurisable, avant ou pendant l'étape de chauffage.

**12.** Procédé conforme à la revendication 1, qui comporte en outre une étape consistant :

- à remettre la solution aqueuse en circulation, avant ou pendant l'étape de chauffage.

**13.** Procédé conforme à la revendication 12, qui comporte en outre une étape consistant :

- à filtrer la solution aqueuse sous pression, pendant la remise en circulation de celle-ci.

**14.** Procédé conforme à la revendication 1, qui comporte en outre une étape consistant :

- à faire circuler la solution aqueuse dans un échangeur de chaleur, pour la faire refroidir jusqu'à une deuxième température.

**15.** Procédé conforme à la revendication 9, qui comporte en outre une étape consistant :

- à retirer la solution aqueuse du récipient pressurisable.

**16.** Procédé conforme à l'une des revendications 1 à 15, qui comporte en outre une étape consistant :

- à filtrer la solution aqueuse pour en retirer au moins une fraction du matériau radioactif.

**17.** Procédé conforme à la revendication 16, dans lequel on opère la filtration à l'aide d'un filtre à particules dont les pores présentent une dimension nominale de 10 à 100 μm.

**18.** Procédé conforme à la revendication 17, qui comporte en outre une étape consistant :

- à faire passer la solution aqueuse à travers un deuxième filtre à particules dont les pores présentent une dimension nominale de 0,1 à 1,0 μm.

**19.** Procédé conforme à la revendication 16, qui comporte en outre une étape consistant :

- à retirer au moins une fraction du matériau radioactif de la solution aqueuse, en faisant passer celle-ci dans une unité d'échange d'ions.

**20.** Procédé conforme à la revendication 16, qui comporte en outre une étape consistant :

- à retirer au moins une fraction du matériau radioactif de la solution aqueuse, en faisant passer celle-ci dans une unité d'osmose inverse.

**21.** Procédé conforme à la revendication 1, qui comporte en outre une étape consistant :

- à mesurer la concentration du polymère hydrosoluble dans la solution aqueuse.

**22.** Procédé conforme à la revendication 1, qui comporte en outre une étape consistant :

- à rendre neutre le pH de la solution aqueuse.

**23.** Procédé conforme à la revendication 22, dans lequel l'étape où l'on rend neutre le pH de la solution aqueuse comporte le fait d'introduire dans celle-ci de l'hydroxyde de sodium.

**24.** Procédé conforme à la revendication 22, dans lequel l'étape où l'on rend neutre le pH de la solution aqueuse comporte le fait d'ajouter à celle-ci au moins un réactif basique en une quantité suffisante pour amener le pH de la solution aqueuse dans l'intervalle allant de 6,0 à 10,0.

**25.** Procédé conforme à la revendication 1, qui comporte en outre une étape consistant :

- à mesurer la baisse du pH de la solution aqueuse.

**26.** Procédé conforme à la revendication 25, dans lequel une baisse du pH de la solution aqueuse au-dessous d'au moins 6,0 indique que la dégradation du polymère hydrosoluble est complète.

**27.** Procédé conforme à la revendication 1, dans lequel on vérifie, en effectuant un test colorimétrique, que l'oxydation du polymère hydrosoluble est pratiquement complète.

**28.** Procédé conforme à la revendication 1, qui comporte en outre une étape consistant :

- à provoquer la biodégradation d'au moins une fraction du ou des produits de dégradation.

**29.** Procédé conforme à la revendication 1, dans lequel le produit de dégradation au nombre d'au moins un comprend au moins un acide organique, et qui comporte en outre une étape consistant :

- à éliminer, au moins en partie, cet ou ces acides organiques en introduisant dans la solution aqueuse des bactéries hétérotrophes et aérobies.

**30.** Procédé conforme à la revendication 1, qui comporte en outre une étape consistant :

- à amener la solution aqueuse dans un lit fluidisé de charbon actif.

**31.** Procédé conforme à la revendication 1, dans lequel le polymère provient d'un ou de plusieurs articles de fabrication choisis parmi des fibres, des tissus non-tissés, des tissus tissés, des films de matière plastique, des pièces moulées, et des combinaisons de tels articles.

**32.** Procédé conforme à la revendication 31, dans lequel le ou les articles englobent un vêtement, un habit de protection, une pièce d'habillement, une toile, un drap, une serviette, une éponge, un sac en plastique, un chiffon, un morceau de gaze, un torchon, un ustensile, une lavette, ou une combinaison de tels articles.

**33.** Procédé conforme à la revendication 1, dans lequel le polymère hydrosoluble (a) et le matériau radioactif (b) constituent collectivement un déchet radioactif et contaminé, lequel procédé permet de réduire d'un facteur supérieur à 1 000 le volume du déchet radioactif et contaminé.

**34.** Procédé conforme à la revendication 1, dans lequel on main-tient la solution aqueuse à une température de réaction d'au moins 82,2 °C (180 °F) pendant un laps de temps d'au moins 30 minutes.

**35.** Procédé conforme à la revendication 1, qui comporte en outre une étape consistant :

- à filtrer la solution aqueuse pour en retirer les substances non dissoutes.

**36.** Procédé conforme à l'une des revendications 1 à 35, dans le-quel le polymère hydrosoluble comprend un poly (alcool vinylique), un poly(acrylate de sodium), un poly(acide maléique), un poly(acrylate d'ammonium) ou une combinaison de tels polymères.

**37.** Procédé conforme à l'une des revendications 1 à 35, dans le-quel le polymère hydrosoluble est un poly(alcool vinylique).

**38.** Procédé conforme à la revendication 37, dans lequel la solution aqueuse contient de 0,5 à 30 % en volume de poly(alcool vinylique).

Solid
PVA Waste
Materials

Water

Pressure → Solubilization ← Heat

Filtration of Non-Solubilized Material

Addition of an Oxidizing Agent

Irradiation of the Solution
(Photo-Chemical Reaction)

Oxidation Reaction of PVA

Measurement of a Parameter
Indicator of PVA Concentration

Filtration of Radioactive Material

Neutralization of pH

Air

Microbes

Biodegradation of Organic
Compounds

Nutrients

$CO_2+H_2O+Biomass$ → Discharge

**FIG. 1**

EP 1 237 820 B1

FIG. 2

35

**FIG. 3**

FIG. 4

**FIG. 4**

**FIG. 5**

FIG. 6

EP 1 237 820 B1

FIG. 7

Primary Influent

706

702

704

Recycle          Recycle          Recycle

700

718

FIG. 8

**FIG. 9**

**FIG. 10**

**FIG. 11**

Primary Influent

Air

Air

704

712

700

730

732

716

718

740

Treatment

Waste Activated Sludge

Concentrate Reject

Clean Water Reservoir

**FIG. 12**

EP 1 237 820 B1